# EUROPEAN PATENT SPECIFICATION

(11) **EP 3 628 916 B1**
(45) Date of publication and mention of the grant of the patent: **23.08.2023**
(21) Application number: 19195736.4
(22) Date of filing: 05.09.2019
(51) Int. Cl.: F21S 43/19

(54) **VEHICULAR LAMP FITTING**
FAHRZEUGLAMPENARMATUR
UNITE DE LAMPE DE VÉHICULE

(30) Priority: 06.09.2018 JP 2018167135
(43) Date of publication of application: 01.04.2020
(73) Proprietor: STANLEY ELECTRIC CO., LTD., Tokyo 153-8636 (JP)
(72) Inventor: CHIKAMA, Hiroyuki, Tokyo, 153-8636 (JP); IMAZEKI, Norifumi, Tokyo, 153-8636 (JP); MINAMI, Haruna, Tokyo, 153-8636 (JP); MINE, Marino, Tokyo, 153-8636 (JP); HANYA, Akihiko, Tokyo, 153-8636 (JP); ITO, Kosaburo, Tokyo, 153-8636 (JP); YAMAMOTO, Takuya, Tokyo, 153-8636 (JP)
(74) Representative: Emde, Eric

(56) References cited:
- WO-A1-2014/128667
- DE-A1-102013 008 192
- JP-A- H11 266 035
- US-A1- 2003 223 236
- US-A1- 2015 171 059
- US-A1- 2015 283 936
- US-A1- 2015 345 740
- US-A1- 2017 016 587

## Description

### FIELD

The present invention relates to a vehicular lamp fitting, and more particularly to a vehicular lamp fitting having a new light-emitting appearance, which satisfies light distribution standards specified by laws and regulations, and is capable of implementing various levels of brightness and light-emitting patterns having different light-emitting shapes (various light-emitting graphics).

### BACKGROUND

A vehicular lamp fitting using an organic electroluminescent, EL, diode has been proposed. For example, JP 2016-058136 A discloses a vehicular lamp fitting in which an organic EL panel which functions as a tail lamp and an organic EL panel which functions as a stop lamp are disposed side by side.
WO 2014/128667 A1 discloses a lighting device which comprises a sheet assembly, which comprises a substrate being at least partly light transmissive and a plurality of light sources coupled to the substrate. At least a portion of the sheet assembly is fixed in a rolled-up arrangement so as to form a roll, whereby the light sources in the portion of the sheet assembly are arranged to emit light at least partly inwards in the roll and/or at least partly towards at least one end of the roll.
US 2017/016587 A1 discloses a vehicular lamp which includes a plurality of organic electroluminescence elements and a flexible printed circuit board to which the plurality of organic electroluminescence elements are connected, the flexible printed circuit board having lines through which each of the organic electroluminescence elements is supplied with electric power independently.
US 2015/345740 A1 was used as a basis for the preamble of claim 1 and discloses an illumination unit including a transparent substrate, a light source, a first half mirror, and a mirror. The light source is mounted on the transparent substrate. The first half mirror is disposed on a front side of the transparent substrate. The mirror is disposed on a rear side of the transparent substrate. Light emitted from the light source is repeatedly reflected between the first half mirror and the mirror while being transmitted through the transparent substrate, so as to be output forward from the first half mirror.

### SUMMARY

However, in the vehicular lamp fitting according to JP 2016-058136 A, only a simple light-emitting pattern, where the organic EL panel which functions as a tail lamp and the organic EL panel which functions as the stop lamp emit light or do not emit light respectively, and with this vehicular lamp fitting, implementing a vehicular lamp fitting having a new light-emitting appearance is difficult. Further, the brightness of the organic EL panel is low at the moment, which makes it difficult to satisfy the light distribution standards specified by laws and regulations (especially in the case of the stop lamp and turn signal lamp for which high brightness is demanded) (e.g. JP 2015-022917 A).

With the foregoing in view, it is an object of the present invention to provide a vehicular lamp fitting having a new light-emitting appearance which satisfies light distribution standards specified by laws and regulations, and is capable of implementing various levels of brightness and light-emitting patterns having different light-emitting shapes (various light-emitting graphics).

In order to achieve the object described above, the present invention provides a vehicular lamp fitting as set forth in claim 1. Preferred embodiments of the present invention may be gathered from the dependent claims.

According to the present invention, a vehicular lamp fitting having a new light-emitting appearance, which satisfies light distribution standards specified by laws and regulations, and is capable of implementing various levels of brightness and light-emitting patterns having different light-emitting shapes (various light-emitting graphics), can be provided.

Further, according to the present invention, a light utilization efficiency of the light that is emitted backward from the semiconductor light-emitting elements of the film light source improves. In other words, the reflection surface can emit light by the light that is emitted backward from the semiconductor light-emitting elements of the film light source. Thereby the light emitted from the reflection surface is visually recognized via the film light source (transparent film), and a three-dimensional light-emitting appearance having a perspective of depth can be implemented.

Since the semiconductor light-emitting elements of which brightness is higher than the organic EL, according to the present invention, the light distribution standards specified by laws and regulations can be satisfied (particularly in the case of a stop lamp and a turn signal lamp for which high brightness is demanded), because the semiconductor light-emitting elements of which brightness is higher than the case of organic EL is used.

In the present invention, the vehicular lamp fitting further includes a light distribution control lens that controls light which is emitted from a part or all of the plurality of semiconductor light-emitting elements and transmitted through the transparent film. The light distribution control lens is disposed between the film light source and the reflection surface, and the reflection surface reflects the light controlled by the light distribution control lens.

In the present invention, it is preferable that the light distribution control lens includes a plurality of lens units respectively corresponding to the plurality of semiconductor light-emitting elements. Each of the plurality of lens units controls light which is emitted from the semiconductor light-emitting element corresponding to the lens unit and transmitted through the transparent film.

In the present invention, it is preferable that each of the plurality of lens unit is a flute cut lens.

In the present invention, it is preferable that each of the plurality of lens units is a lens unit of which focal point is set in the vicinity of the semiconductor light-emitting element corresponding to the lens unit. The reflection surface reflects the light controlled by each of the plurality of lens units to a target direction.

According to these aspects, the light utilization efficiency of the light that is emitted backward from the semiconductor light-emitting elements of the film light source improves. In other words, a predetermined light distribution pattern (e.g. tail lamp light distribution pattern, stop lamp light distribution pattern) can be formed by reflecting the light radiated (emitted) backward from the film light source in a target direction using the reflected surface, in addition to the light radiated (emitted) forward from the film light source.

In the present invention, it is preferable that each of the plurality of lens units is a Fresnel lens.

In the present invention, it is preferable that the vehicular lamp fitting further includes a film light source support unit that supports the film light source in a state of the transparent film maintaining a predetermined shape. The film light source support unit includes a front lens, a rear lens, and a lens fixing unit that fixes the front lens and the rear lens, and the lens fixing unit fixes the front lens and the rear lens in a state of the film light source being disposed between the front lens and the rear lens.

In the present invention, it is preferable that the rear lens is configured as the light distribution control lens.

In the present invention, it is preferable that the light distribution control lens is disposed between the rear lens and the reflection surface.

In the present invention, it is preferable that the vehicular lamp fitting further includes: a film light source support unit that supports the film light source in a state of the transparent film maintaining a predetermined shape; and a plurality of the film light sources. The plurality of film light sources are disposed in a state of being overlapped in a longitudinal direction of the vehicle within a same range in a front view, the plurality of film light sources include at least a first film light source and a second film light source, the film light source support unit includes a front lens, an intermediate lens, a rear lens and a lens fixing unit which fixes the front lens, the intermediate lens and the rear lens, and the lens fixing unit fixes the front lens, the intermediate lens and the rear lens in a state where the first film light source is disposed between the front lens and the intermediate lens, and the second film light source is disposed between the intermediate lens and the rear lens.

In the present invention, it is preferable that the intermediate lens and the rear lens are each configured as the light distribution control lens.

In the present invention, it is preferable that the vehicular lamp fitting includes the light distribution control lenses respectively disposed between the intermediate lens and the second film light source, and between the rear lens and the reflection surface.

In the present invention, it is preferable that the vehicular lamp fitting further comprises a film light source support unit that supports the film light source in a state of the transparent film maintaining a predetermined shape; a lamp fitting unit that includes the film light source and the film light source support unit; and a lamp fitting unit support unit that is transparent supports the lamp fitting unit. The lamp fitting unit support unit supports the lamp fitting unit in a lamp chamber constituted of a housing and an outer lens in a state of maintaining a space between the lamp fitting unit and the housing.

According to these aspects, the lamp fitting unit is disposed in the lamp chamber in a state of maintaining a space between the lamp fitting unit and the housing, and the lamp fitting support unit is transparent and is difficult to be visually recognized, hence a light-emitting appearance that is visually recognized, as if the lamp fitting unit were floating in the lamp chamber, is implemented.

In the present invention, it is preferable that a vehicular lamp fitting has: a film light source that includes a transparent film having flexibility, and a plurality of semiconductor light-emitting elements which are fixed in a state of being two-dimensionally disposed on at least a front surface of the transparent film; a film light source support unit that supports the film light source in a state of the transparent film maintaining a predetermined shape; a lamp fitting unit that includes the film light source and the film light source support unit; and a lamp fitting unit support unit that is transparent and supports the lamp fitting unit. The lamp fitting unit support unit supports the lamp fitting unit in a lamp chamber constituted of a housing and an outer lens in a state of maintaining a space between the lamp fitting unit and the housing.

According to this aspect, the lamp fitting unit is disposed in the lamp chamber in a state of maintaining a space between the lamp fitting unit and the housing, and the lamp fitting support unit is transparent and is difficult to be visually recognized, hence a light-emitting appearance that is visually recognized, as if the lamp fitting unit were floating in the lamp chamber, is implemented.

In the present invention, it is preferable that the lamp fitting unit support unit is a transparent support unit of which a part is fixed to the lamp fitting unit and another part is fixed to the housing.

In the present invention, it is preferable that the lamp fitting unit is cantilever-supported by the transparent support unit.

### BRIEF DESCRIPTION OF DRAWINGS

FIG. 1 is a front view of the vehicular lamp fitting 10.
FIG. 2A is an A-A cross-sectional view of FIG. 1, and FIG. 2B is a B-B cross-sectional view of FIG. 1.
FIG. 3 is an exploded perspective view of the lamp fitting unit 20.
FIG. 4A is an example (front view) of the first film light source 22A, and FIG. 4B is an example (front view) of the second film light source 22B.
FIG. 5 is a partial enlarged view of the wiring pattern 22c around the semiconductor light-emitting element 22b.
FIG. 6A is an example of flip-chip mounting, and FIG. 6B is an example of face-up mounting, and FIG. 6C is another example of face-up mounting.
FIG. 7 is a perspective view of each flange unit 24a2 to 24c2 in the overlapped state.
FIG. 8 is a front view displaying through the first film light source 22A and the second film light source 22B disposed behind the first film light source 22A.
FIG. 9 is a perspective view of the housing 52.
FIG. 10 is an example when the lamp fitting unit 20 is configured using four film light sources which are overlapped in the longitudinal direction of the vehicle.
FIG. 11A and FIG. 11B are examples of the light-emitting patterns of the film light sources.
FIG. 12 is an example when the light-guiding plate 28, which guides the light from the semiconductor light-emitting elements 26 and emits the guided light from the front surface, is disposed between the front lens 24a and the first film light source 22A.
FIG. 13 is a schematic diagram (vertical cross-sectional view) of the vehicular lamp fitting 10A according to the present invention.
FIG. 14 is a schematic diagram (perspective view) of the vehicular lamp fitting 10A according to the present invention.
FIG. 15 is an example (schematic diagram) of the vehicular lamp fitting 10A1.
FIG. 16 is another example (schematic diagram) of the vehicular lamp fitting 10A1.
FIG. 17 is an example (schematic diagram) of the vehicular lamp fitting 10A2.
FIG. 18 is another example (schematic diagram) of the vehicular lamp fitting 10A2.
FIG. 19 is a schematic diagram (horizontal cross-sectional view) of the vehicular lamp fitting 10B.
FIG. 20 is a schematic diagram (horizontal cross-sectional view) of the vehicular lamp fitting 10B.

### DESCRIPTION OF EMBODIMENTS

A vehicular lamp fitting 10 will be described with reference to the drawings. In each drawing, corresponding composing elements are denoted with a same reference sign, and redundant description thereof will be omitted.

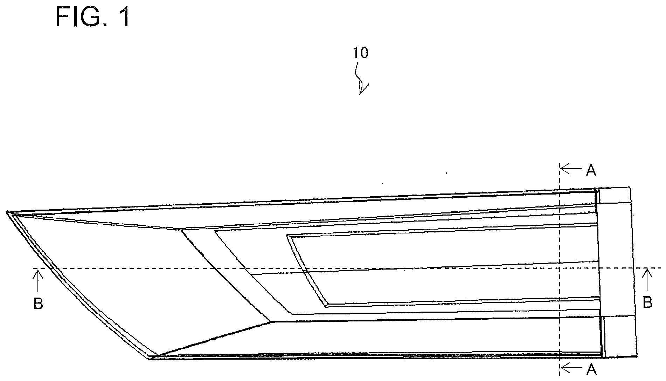

FIG. 1 is a front view of the vehicular lamp fitting 10.

The vehicular lamp fitting 10 illustrated in FIG. 1 is a vehicular signal lamp fitting that functions as a tail lamp and a stop lamp, for example. The vehicular lamp fitting 10 is disposed on both the left and right sides of the rear end portion of a vehicle (e.g. automobile) respectively. The vehicular lamp fittings 10 are disposed on the left and right sides so as to be bilaterally symmetrical, hence the vehicular lamp fitting 10, which is disposed on the left side of the rear end portion of the vehicle (left side when facing the front side of the vehicle), will be described. To simplify description in the following, "front side" refers to the rear side of the vehicle, and "rear side" refers to the front side of the vehicle.

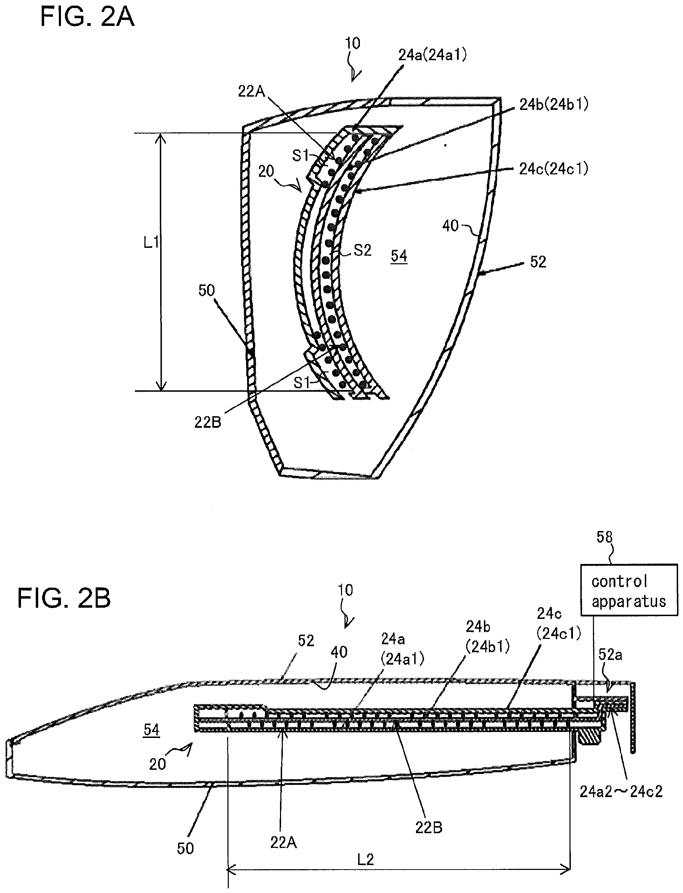

FIG. 2A is an A-A cross-sectional view of FIG. 1, and FIG. 2B is a B-B cross-sectional view of FIG. 1.

As illustrated in FIG. 2A and FIG. 2B, the vehicular lamp fitting 10 includes a lamp fitting unit 20 and a reflection surface 40. The lamp fitting unit 20 is disposed in a lamp chamber 54 constituted of an outer lens 50 and a housing 52, and is installed in the housing 52.

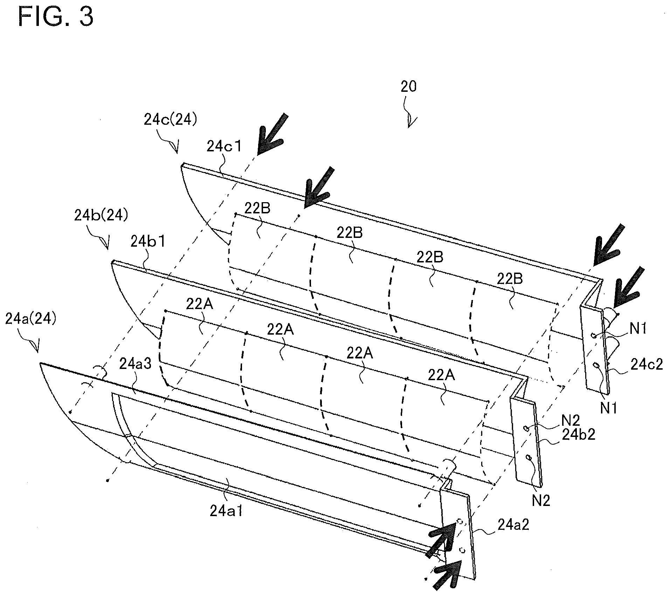

FIG. 3 is an exploded perspective view of the lamp fitting unit 20.

As illustrated in FIG. 3, the lamp fitting unit 20 includes: a tail lamp film light source 22A (four tail lamp film light sources are illustrated in FIG. 3 as an example, and are hereafter called the first film light source 22A); stop lamp film light source 22B (four stop lamp film light sources are illustrated in FIG. 3 as an example, and are hereafter called the second film light source 22B); and film light source support units 24 (24a to 24c). Hereafter the first film light source 22A and the second film light source 22B are called the film light sources 22 if no special distinction is required.

The film light source will be described first.

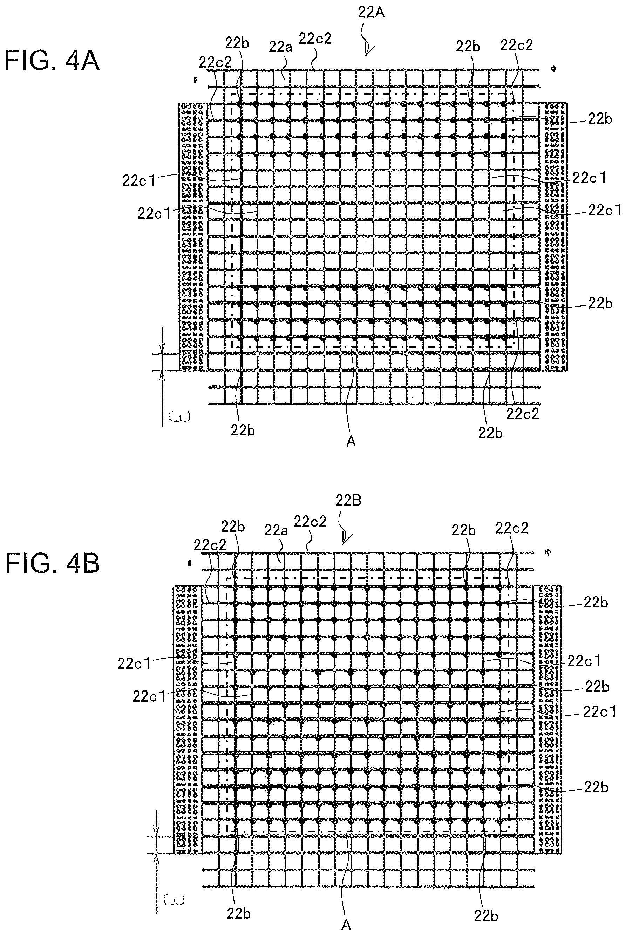

FIG. 4A is an example (front view) of the first film light source 22A, and FIG. 4B is an example (front view) of the second film light source 22B.

As illustrated in FIG. 4A, the first film light source 22A includes a film 22a and a plurality of semiconductor light-emitting elements 22b. The second film light source 22B has a similar configuration as the first film light source 22A, except that a number of semiconductor light-emitting elements 22b is different, hence in the following, the first film light source 22A will be described representing these film light sources 22A and 22B. In both the first film light source 22A and the second film light source 22B, the density of the disposed semiconductor light-emitting elements 22b is changed on the film surface. The semiconductor light-emitting elements 22b are disposed so as to be dense near the upper and lower edges, and sparse near the center. A number of the semiconductor light-emitting elements 22b of the first film light source 22A and a number of the semiconductor light-emitting elements 22b of the second film light source 22B may be the same in some cases. Further, the arrangement of the semiconductor light-emitting elements 22b of the first film light source 22A and the arrangement of the semiconductor light-emitting elements 22b of the second film light source 22B may be different or may be the same depending on the case.

The plurality of semiconductor light-emitting elements 22b are fixed to (mounted on) the film 22a by performing bump connection between each electrode pad and a wiring pattern 22c formed on the film 22a, for example. This aspect will be described later.

The film 22a is a flexible transparent film having a front surface and a rear surface which is on the opposite side of the front surface. The film 22a may be colorless transparent, may be colored transparent, or in some cases may be opaque. The first film light source 22A and the second film light source 22B are disposed in an overlapped state, hence in the first film light source 22A (front side), a transparent film is used for the film 22a, so that the light Ray 1 from the semiconductor light-emitting elements 22b of the second film light source 22B (rear side) transmitted through the film 22b. In the second film light source 22B as well, a transparent film 22a is used for the film 22a, so that the light Ray 2 from the semiconductor light-emitting elements 22b of the second film light source 22B transmitted through the film 22a, and is directed to a reflection surface 40 disposed on the rear side. The thickness of the film 22a is about 100 µm or less, for example. The outer shape of the film 22a is a rectangle, for example. The material of the film 22a is, for example, polyimide, polyethylene terephthalate (PET), polyethylene naphthalate (PEN), cellulose nano-fiber or polyamide imide.

A wiring pattern 22c (22c1, 22c2) is formed on the film 22a. The wiring pattern 22c is a wiring pattern made of such metal as silver, copper and gold. The wiring pattern 22c may be a transparent wiring pattern made of indium tin oxide (ITO) or the like.

The wiring pattern 22c includes a plurality of vertical wiring patterns 22c1 which are disposed in parallel in the vertical direction, and a plurality of horizontal wiring patterns 22c2 which are disposed in parallel in the horizontal direction. The vertical wiring patterns 22c1 and the horizontal wiring patterns 22c2 cross each other and constitutes a lattice pattern. Besides the lattice pattern, various design patterns (e.g. patterns including straight lines and curved lines) may be used for the wiring pattern 22c.

The vertical wiring pattern 22c1 is a wiring pattern to supply driving current to the semiconductor light-emitting elements 22b.

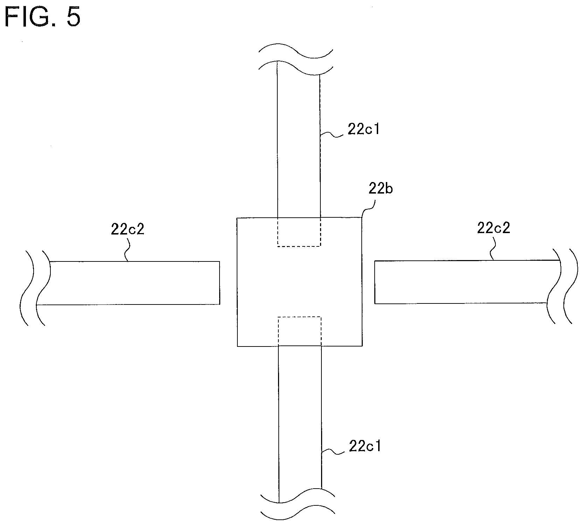

FIG. 5 is a partial enlarged view of the wiring pattern 22c around the semiconductor light-emitting element 22b.

As illustrated in FIG. 5, the horizontal wiring pattern 22c2 is an intermittent wiring pattern, where the portion near the vertical wiring pattern 22c1 is disconnected. The horizontal wiring pattern 22c2 is a wiring pattern (dummy wiring pattern) to visually recognize the entire vertical wiring pattern 22c1 and the horizontal wiring pattern 22c2 as a lattice pattern, and is not a wiring pattern to supply the driving current to the semiconductor light-emitting element 22b. The vertical wiring pattern 22c1 and the horizontal wiring pattern 22c2 also play a role of radiating heat generated in the semiconductor light-emitting element 22b respectively.

The wiring pattern 22c can be formed as follows.

First on the front surface of the film 22a, a solution, in which conductive particles (e.g. conductive nano particles) and an insulation material are dispersed, or a solution, in which conductive particles coated by an insulation material layer are dispersed, is applied, so as to form a film of conductive particles coated by the insulation material.

Then the laser light is radiated to the formed film to sinter the film. If Ag is used, for example, as the conductive particles, a silver wiring pattern 22c can be formed here (e.g. see Japanese Patent Application Publication No. 2018-4995).

The wiring pattern 22c may also be formed by forming a metal film (e.g. copper) on one surface of the film 22a, and performing a known etching thereon.

The plurality of semiconductor light-emitting elements 22b are mounted on the film 22a. Further, in some cases, electronic components (e.g. resistors) other than the semiconductor light-emitting elements 22b may be mounted on the film 22a.

The semiconductor light-emitting element 22b is a semiconductor light-emitting element of which color of the emitted light is red (in the case of constructing a tail lamp or stop lamp). The color of the emitted light of the semiconductor light-emitting element 22b may be amber (in the case of constructing a turn signal light), or may be white (in the case of constructing a rear lamp).

The semiconductor light-emitting element 22b is constituted by an LED chip (LED element) alone. However the semiconductor light-emitting element 22b may be constituted by a combination of an LED chip and a wavelength conversion material, such as phosphor or quantum dots, or may be constituted by a combination of a plurality of LED chips.

The size of the semiconductor light-emitting element 22b is about 300 µm², for example. The outer shape of the semiconductor light-emitting element 22b is a square, for example. However in some cases the outer shape of the semiconductor light-emitting element 22b may be a rectangle, a triangle or the like.

The semiconductor light-emitting element 22b includes a substrate, an n-type semiconductor layer, a light-emitting layer, a p-type semiconductor layer, an n-side electrode pad, a p-side electrode pad and the like (not illustrated). The substrate may be transparent or opaque with respect to the light radiated from the light emitting layer, but the substrate of the semiconductor light-emitting element 22b that is flip-chip mounted is preferably transparent. The substrate of the semiconductor light-emitting element 22b that is face-up mounted is preferably opaque, but may be transparent. The n-type semiconductor layer, light-emitting layer and p-type semiconductor layer are layered on the substrate. The n-type electrode pad and the p-type electrode pad are hereafter called electrode pads 22b1.

The semiconductor light-emitting elements 22b are fixed to at least the front surface of the film 22a in a state of being disposed two-dimensionally (flip-chip mounting). For example, in FIG. 4A, each semiconductor light-emitting element 22b of the first film light source 22A is fixed to a black dot portion where the vertical wiring pattern 22c1 and the horizontal wiring pattern 22c2 cross. In FIG. 4B, on the other hand, each semiconductor light source 22b of the second film light source 22B is fixed to a black dot portion where the vertical wiring pattern 22c1 and the horizontal wiring pattern 22c2 cross.

The semiconductor light-emitting elements 22b are two-dimensionally disposed in a 50 cm² rectangular region A in the front view (see regions enclosed by dashed lines in FIG. 4A and FIG. 4B), for example, considering the surface area requirements specified for the stop lamp.

The disposition intervals of the semiconductor light-emitting elements 22b (that is, the intervals between the vertical wiring patterns 22c1 and the intervals between the horizontal wiring patterns 22c2) are 3 mm, for example. However, the positions where the semiconductor light-emitting elements 22b are disposed are not limited to the portions where the vertical wiring patterns 22c1 and the horizontal wiring patterns 22c2 cross, but may be various other positions considering the design of the vehicular lamp fitting.

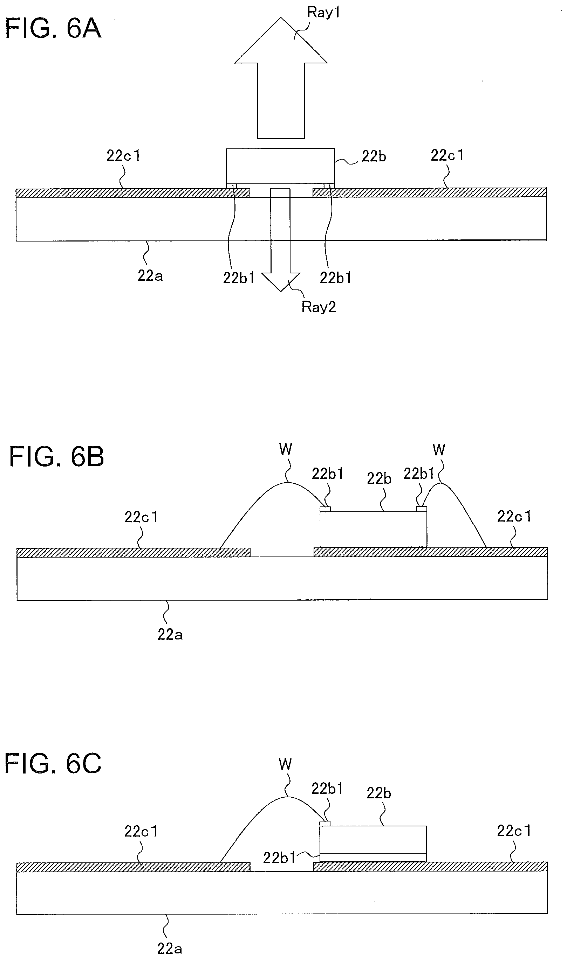

FIG. 6A is an example of flip-chip mounting.

As illustrated in FIG. 6A, each semiconductor light-emitting element 22b is mounted on the film 22a in a state where the surface on the side of the electrode pad 22b1 being disposed (hereafter electrode surface) faces the front surface of the film 22a (flip-chip mounting). In concrete terms, the semiconductor light-emitting element 22b is fixed to the film 22a by bump connection between the electrode pad 22b1 and the wiring pattern 22c (vertical wiring pattern 22c1) formed on the film 22a. The semiconductor light-emitting elements 22b fixed to the film 22a may be sealed by resin or covered by a cover member (not illustrated).

FIG. 6B is an example of face-up mounting.

As illustrated in FIG. 6B, the semiconductor light-emitting element 22b may be mounted on the film 22a in a state where the surface on the opposite side of the electrode surface faces the front surface of the film 22a (face-up mounting). In this case, the semiconductor light-emitting element 22b is fixed to the film 22a (or the wiring pattern) by adhesive, such as silver paste and resin, for example. Then the electrode pad 22b1 and the wiring pattern 22c (vertical wiring pattern 22c1) are electrically connected by metal wire W (double wire).

FIG. 6C is another example of face-up mounting.

As illustrated in FIG. 6C, the semiconductor light-emitting element 22b is a semiconductor light-emitting element 22b on which electrode pads 22b1 are disposed, and is mounted on the film 22a in a state where a larger one of the electrode pads 22b1 facing each other faces the front surface of the film 22a (face-up mounting). In this case, the semiconductor light-emitting element 22b is fixed to the wiring pattern (vertical wiring pattern 22c1) by conductive adhesive such as silver paste, for example. Then the smaller one of the electrode pads 22b1 and the wiring pattern 22c (vertical wiring pattern 22c1) are electrically connected by a metal wire W (single wire).

The semiconductor light-emitting element 22b emits light by the driving current being supplied via the wiring pattern 22c (vertical wiring pattern 22c1). As illustrated in FIG. 6A, the light emitted from the semiconductor light-emitting element 22b includes the light Ray 1 which is emitted from the surface on the opposite side of the electrode surface, and the light Ray 2 which is emitted from the electrode surface.

The ratio of the Ray 1, which is emitted from the surface on the opposite side of the electrode surface, and the Ray 2, which is emitted from the electrode surface, differs depending on the structure of the semiconductor light-emitting element 22b and other factors, but is 7:3, for example. The thickness of each arrow in FIG. 6A indicates this ratio.

As illustrated in FIG. 6B and FIG. 6C, in the case of mounting the semiconductor light-emitting element 22b face-up, a film light source, which emits light only from one surface, is formed. In this case, silver is used for the vertical wiring pattern 22c1, or reflective silver paste is used as the adhesive, then light that is directed from the semiconductor light-emitting element 22b toward the film 22a is reflected, and is emitted from the surface on the opposite side of the film 22a.

Further, as illustrated in FIG. 6B, even in the case of mounting the semiconductor light-emitting element 22b face-up, a transparent substrate is used as the substrate of the semiconductor light-emitting element 22b, and a transparent adhesive is used as the adhesive which adheres the semiconductor light-emitting element 22b and the film 22a (or with the vertical wiring pattern 22c1 if the vertical wiring pattern 22c1 is a transparent electrode), for example, then similarly to FIG. 6A, a film light source which emits light on both one side and the opposite side thereof is formed.

The film light source support unit 24 will be described next.

The film light source support unit 24 supports the first and second film light sources 22A and 22B in a state where the film 22a is maintaining a predetermined shape (e.g. flat shape or curved shape). As illustrated in FIG. 3, the film light source support unit 24 includes a front lens 24a, an intermediate lens 24b, a rear lens 24c and a lens fixing unit 24d (e.g. screws). In FIG. 3, the lens fixing unit 24d is omitted. The material of each lens 24a to 24c is a transparent resin, such as acrylic or polycarbonate.

As illustrated in FIG. 3, the intermediate lens 24b includes a lens main body 24b1 and a flange unit 24b2. The lens main body 24b1 is a lens that is a transparent plate having a vertical cross-section which is convexly curved forward (see FIG. 2A), and having a horizontal cross-section which is a straight line (see FIG. 2B). The first film light source 22A is positioned with respect to the intermediate lens 24b, and is fixed to the intermediate lens 24b in a state where the rear face of the first film light source 22A faces the front surface of the intermediate lens 24b, as illustrated in FIG. 3 (e.g. adhered or roughly adhered by double-sided tape). Thereby the film light source 22A is supported in a state of being curved along the intermediate lens 24b. The first film light source 22A may be sandwiched between the front lens 24a and the intermediate lens 24b.

Similarly to the intermediate lens 24b, the rear lens 24c includes a lens main body 24c1 and a flange unit 24c2. The lens main body 24c1 is a lens that is a transparent plate having a vertical cross-section which is convexly curved forward (see FIG. 2A), and having a horizontal cross-section which is a straight line (see FIG. 2B). The second film light source 22B is positioned with respect to the rear lens 24c, and is fixed to the rear lens 24c in a state where the rear face of the second film light source 22B faces the front surface of the rear lens 24c, as illustrated in FIG. 3 (e.g. adhered or roughly adhered by double-sided tape). Thereby the second film light source 22B is supported in a state of being curved along the rear lens 24c. The second film light source 22B may be sandwiched between the intermediate lens 24b and the rear lens 24c.

The front lens 24a includes a lens main body 24a1, a flange unit 24a2 and a frame unit 24a3 which encloses the lens main body 24a1. The lens main body 24a1 is a lens that is a transparent plate having a vertical cross-section which is convexly curved forward (see FIG. 2A), and having a horizontal cross-section which is a straight line (see FIG. 2B). The frame unit 24a3 may be decorated by aluminum deposition or the like, or may be a plain transparent plate. By making the lenses 24a, 24b, 24c and the films 22a of the first and second film light sources 22A and 22B transparent, the presence of the light sources does not stand out when the light sources (e.g. semiconductor light-emitting elements 22b) are not emitting light.

The lens fixing unit 24d is a unit that fixes the front lens 24a, the intermediate lens 24b and the rear lens 24c in a mutually positioned state, and is screws, for example.

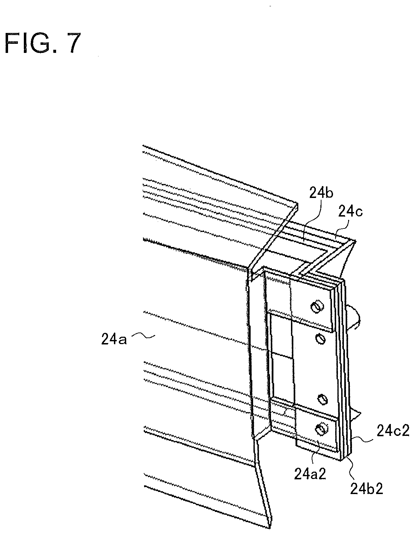

The front lens 24a, the intermediate lens 24b and the rear lens 24c are set in a state where the front surface of the first film light source 22A (semiconductor light-emitting elements 22b) and the rear surface of the front lens 24a face each other via a space S1 (see FIG. 2A); the front surface of the second film light source 22B (semiconductor light-emitting elements 22b) and the rear surface of the intermediate lens 24b face each other via a space S2 (see FIG. 2A); and flange units 24a2 to 24c2 of respective lenses 24a to 24c overlap each other, as illustrated in FIG. 7, and the front lens 24a, the intermediate lens 24b and the rear lens 24c are fixed in this state. Here the screws (not illustrated) of the lens fixing unit 24d are inserted in the screw hole N1 formed in the rear lens 24c (flange unit 24c2), and the screw hole N2 formed in the intermediate lens 24b (flange unit 24b2), and these screws are screwed into the front lens 24a (flange unit 24a2). FIG. 7 is a perspective view of each flange unit 24a2 to 24c2 in the overlapped state. A number of screwing locations in each lens 24a to 24c is not limited to two. For example, the number may be six, as indicated by the six arrow marks in FIG. 3.

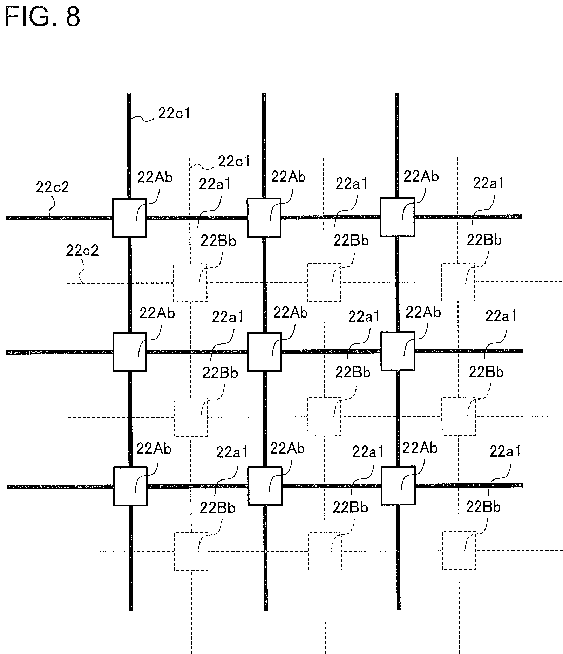

FIG. 8 is a front view displaying through the first film light source 22A and the second film light source 22B disposed behind the first film light source 22A. In FIG. 8, the reference sign 22Ab indicates the semiconductor light-emitting element 22b of the first film light source 22A, and the reference sign 22Bb indicates the semiconductor light-emitting element 22b of the second film light source 22B.

In the state where each lens 24a to 24c is fixed by the screws as mentioned above, the first and second film light sources 22A and 22B are disposed in the same range (see the ranges indicated by L1 and L2 in FIG. 2A and FIG. 2B) in the front view, so as to be overlapped in the longitudinal direction of the vehicle (in tandem in the longitudinal direction of vehicle), as illustrated in FIG. 2A and FIG. 2B. "The same range" refers to the range that satisfies the area requirements specified by the laws and regulations, and is 50 cm², for example, in the case of the stop lamp.

The advantages of disposing the first and second film light sources 22A and 22B in the same range in the front view like this, so as to be overlapped in the longitudinal direction of the vehicle, are as follows.

In the above mentioned prior art (see Japanese Patent Application Publication No. 2016-58136), for example, the organic EL panel which functions as the tail lamp and the organic EL panel which functions as the stop lamp are disposed in parallel (side by side) in the front view, which means that the size of the vehicle lamp fitting in the front view is large.

On the other hand, the first and second film light sources 22A and 22B are disposed in the same range in the front view, so as to be overlapped in the longitudinal direction of the vehicle (in tandem in the longitudinal direction of the vehicle), hence compared with the above mentioned prior art, the size of the vehicle lamp fitting in the front view can be smaller.

Further, as illustrated in FIG. 8, in the state where each lens 24a to 24c is fixed by the screws as mentioned above, the semiconductor light-emitting elements 22b (e.g. 22Bb) of one of the first and second film light sources 22A and 22B are disposed so as to not be overlapped with the semiconductor light-emitting elements 22b (e.g. 22Ab) of the other film light source of the first and second film light sources 22A and 22B and the wiring pattern 22c, but to be overlapped with the film portion 22a1 of the other film light source in the front view. Each of the semiconductor light-emitting elements 22b of one of the film light sources is disposed in a position surrounded by the semiconductor light-emitting elements 22b of the other film light sources in the front view. In other words, each of the semiconductor light-emitting elements 22Ab (22Bb) is disposed in a position surrounded by the semiconductor light-emitting elements 22Bb (22Ab) in the front view.

Thereby the light Ray 1 that is emitted forward from each semiconductor light-emitting element 22b (22Bb) of the second film light source 22B which is disposed in the rear transmitted through the film portion 22a1 among the semiconductor light-emitting elements 22b (22Ab) of the first film light source 22A disposed in the front and emitted forward, without being interrupted (or hardly being interrupted) by the semiconductor light-emitting elements 22b (22Ab) of the first film light source 22A disposed in the front and the wiring pattern 22c. This improves the light utilization efficiency of the light Ray 1, which is emitted forward from each semiconductor light-emitting element 22b (22Bb) of the second film light source 22B disposed in the rear.

On the other hand, the light Ray 2 that is emitted backward from each semiconductor light-emitting element 22b (22Ab) of the first film light source 22A which is disposed in the front transmits backward through the film portion among the semiconductor light-emitting elements 22b (22Bb) of the second film light source 22B disposed in the rear without being interrupted (or hardly being interrupted) by the semiconductor light-emitting elements 22b (22Bb) of the second film light source 22B disposed in the rear and the wiring pattern 22c. This improves the light utilization efficiency of the light Ray 2, which is emitted backward from each semiconductor light-emitting element 22b (22Ab) of the first film light source 22A disposed in the front.

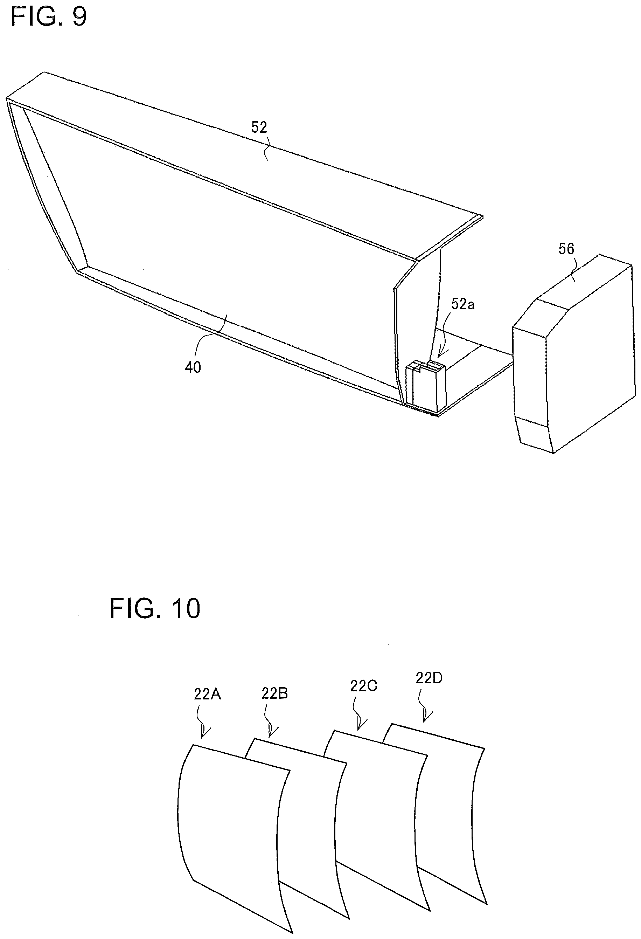

FIG. 9 is a perspective view of the housing 52.

The lamp fitting unit 20 configured as described above is fixed in a state of being positioned in the housing 52. In concrete terms, the lamp fitting unit 20 is fixed in a state of being positioned in the housing 52 by fitting each flange unit 24a2 to 24c2 (see FIG. 7), which are overlapped as above, into groove portions 52a (see FIG. 9), which are formed in the housing 52. Each flange portion 24a2 to 24c2 corresponds to the lamp fitting unit support unit.

Thereby the lamp fitting unit 20 is disposed in the lamp chamber 54 in a state of maintaining a space between the lamp fitting unit and the housing 52 (see FIG. 2A and FIG. 2B). The groove portion 52a, where each flange portion 24a2 to 24c2 is fitted in, is covered by an extension 56 (see FIG. 9).

As illustrated in FIG. 2A and FIG. 2B, a reflection surface 40 is disposed in the back of the lamp fitting unit 20. The reflection surface 40 is formed by performing embossing processing on the front surface of the housing 52, and depositing aluminum on the embossed front surface (embossed surface) of the housing 52.

The reflection surface 40 is disposed in a state of facing the rear surface of the film 22a of the second film light source 22B, and reflects the light Ray 2 which is emitted from a part or all of the plurality of semiconductor light-emitting elements 22b and transmitted through the film 22a. In concrete terms, the reflection surface 40 reflects the light Ray 2 which is emitted from the electrode surface of the semiconductor light-emitting element 22b (22Ba) of the first film light source 22A, transmitted through the film portion of the second film light source 22B, and emitted backward, and the light Ray 2 which is emitted from the electrode surface or the semiconductor light-emitting element 22b (22Bb) of the second film light source 22B, and emitted backward. The reflection surface 40 may be omitted.

The light-emitting patterns of the first and second film light sources 22A and 22B (semiconductor light-emitting elements 22b) will be described next. The first and second film light sources 22A and 22B are connected to a control apparatus 58 (see FIG. 2B), to control the light-emitting state (lighting state) of each semiconductor light-emitting element 22b.

An example of the light-emitting pattern when the vehicular lamp fitting 10 functions as a tail lamp will be described first.

When the vehicular lamp fitting 10 functions as the tail lamp, a part or all of the respective semiconductor light-emitting elements 22b of the first film light source 22A and the second film light source 22B are emitted according to a first light-emitting pattern.

The first light-emitting pattern is a pattern in which all the semiconductor light-emitting elements 22b of the first film light source 22A (see the portions indicated by the black dots in FIG. 4A) and all the semiconductor light-emitting elements 22b of the second film light source 22B (see the portions indicated by the black dots in FIG. 4B) emit light at a first brightness, for example. The first light-emitting pattern is not limited to this. For example, for the first light-emitting pattern, a light-emitting pattern, in which a part of the semiconductor light-emitting elements 22b are turned OFF or dimmed, may be used. Further, for the first light-emitting pattern, a light-emitting pattern, in which brightness gradually changes, may be used. Furthermore, for the first light-emitting pattern, a light-emitting pattern, in which the brightness of each semiconductor light-emitting element 22b is changed, may be used. Thereby a perspective (perception of depth) can be expressed.

The first light-emitting pattern is not limited to a static light-emitting pattern, but may be a dynamic light-emitting pattern of which brightness, light-emitting shapes, light-emitting position and so forth change over time.

In the case where the respective semiconductor light-emitting elements 22b of the first film light source 22A and the second film light source 22B emit light according to the first light-emitting pattern, as described above, a tail lamp light distribution pattern is formed by the light Ray 1, which is emitted forward from the semiconductor light-emitting elements 22b (22Ab) of the first film light source 22A disposed in the front, and the light Ray 1, which is emitted forward from the semiconductor light-emitting elements 22b (22Bb) of the second film light source 22B disposed in the rear, transmitted through the film portion 22a1 of the first film light source 22A disposed in the front, and emitted forward.

Further, the reflection surface 40 emits light by reflecting the light Ray 2, which is emitted backward from the semiconductor light-emitting elements 22b (22Bb) of the second film light source 22B disposed in the rear, and the light Ray 2, which is emitted backward from the semiconductor light-emitting elements 22b (22Ab) of the first film light source 22A disposed in the front via the film 22a, transmitted through the film portion of the second film light source 22B disposed in the rear, and emitted backward.

As described above, when the vehicular lamp fitting 10 functions as the tail lamp, the first film light source 22A, the second film light source 22B and the reflection surface 40 emit light respectively, and the second film light source 22B and the reflection surface 40, which emit light behind the first film light source 22A, are visually recognized through the first film light source 22A. Thereby a three-dimensional light emitting appearance, have a perception of depth, is implemented.

Also as described above, the film light source support units 24 (24a to 24c) support the first and second film light sources 22A and 22B in the state of maintaining a predetermined shape (e.g. curved shape). Thereby the respective semiconductor light-emitting elements 22b of the first and second film light sources 22A and 22B are three-dimensionally disposed. This also implements three-dimensional light-emitting appearances with a perception of depth.

The lamp fitting unit 20 is disposed in the lamp chamber 54 in the state of maintaining a space between the lamp fitting unit and the housing 52, therefore a light-emitting appearance, that is visually recognized as if the lamp fitting unit 20 were floating in the lamp chamber 54, is implemented.

An example of the light-emitting pattern when the vehicular lamp fitting 10 functions as a stop lamp will be described next.

When the vehicular lamp fitting 10 functions as the stop lamp, a part or all of the respective semiconductor light-emitting elements 22b of the first film light source 22A and the second film light source 22B are emitted according to a second light-emitting pattern, which is different from the first light-emitting pattern.

The second light-emitting pattern is a pattern in which all the semiconductor light-emitting elements 22b of the first film light source 22A (see the portions indicated by the black dots in FIG. 4A) and all the semiconductor light-emitting elements 22b of the second film light source 22B (see the portions indicated by the black dots in FIG. 4B) emit light at a second brightness (second brightness > first brightness), for example. The second light-emitting pattern is not limited to this. For example, for the second light-emitting pattern, a light-emitting pattern, in which a part of the semiconductor light-emitting elements 22b are turned OFF or dimmed, may be used. Further, for the second light-emitting pattern, a light-emitting pattern, in which brightness gradually changes may be used. Furthermore, for the second light-emitting pattern, a light-emitting pattern, in which the brightness of each semiconductor light-emitting element 22b is changed, may be used. Thereby a perspective (perception of depth) can be expressed.

The second light-emitting pattern is not limited to a static light-emitting pattern, but may be a dynamic light-emitting pattern in which brightness, light-emitting shape, light-emitting position and so forth change over time.

In the case where the respective semiconductor light-emitting elements 22b of the first film light source 22A and the second film light source 22B emit light according to the second light-emitting pattern, as described above, the stop lamp light distribution pattern is formed by the light Ray 1 which is emitted forward from the semiconductor light-emitting elements 22b (22Ab) of the first film light source 22A disposed in the front, and the light Ray 1 which is emitted forward from the semiconductor light-emitting elements 22b (22Bb) of the second film light source 22B disposed in the back, transmitted through the film portion 22a1 of the first film light source 22A disposed in the front, and emitted forward.

Further, the reflection surface 40 emits light by reflecting the light Ray 2 which is emitted backward from the semiconductor light-emitting elements 22b (22Bb) of the second film light source 22B disposed in the back, and the light Ray 2 which is emitted backward from the semiconductor light-emitting elements 22b (22Ab) of the first film light source 22A disposed in the front via the film 22a, transmitted through the film portion of the second film light source 22B disposed in the rear, and emitted backward.

As described above, when the vehicular lamp fitting 10 functions as the stop lamp, the first film light source 22A, the second film light source 22B and the reflection surface 40 emit light respectively, and the second film light source 22B and the reflection surface 40, which emit light behind the first film light source 22A, are visually recognized through the first film light source 22A. Thereby a three-dimensional light-emitting appearance, having a perspective of depth, is implemented.

Also as described above, the film light source support units 24 (24a to 24c) support the first and second film light sources 22A and 22B in the state of maintaining a predetermined shape (e.g. curved shape). Thereby the respective semiconductor light-emitting elements 22b of the first and second film light sources 22A and 22B are three-dimensionally disposed. This also implements a three-dimensional light-emitting appearance having a perspective of depth.

The lamp fitting unit 20 is disposed in the lamp chamber 54 in the state of maintaining a space between the lamp fitting unit and the housing 52, therefore a light-emitting appearance, that is visually recognized as if the lamp fitting unit 20 were floating in the lamp chamber 54, is implemented.

As described above, according to the vehicular lamp fitting 10, a vehicular lamp fitting having a new light-emitting appearance, which satisfies light distribution standards specified by laws and regulations, and is capable of implementing various levels of brightness and light-emitting patterns having different light-emitting shapes (various light-emitting graphics) can be provided.

This is because the vehicular lamp fitting 10 has the first and second film light sources 22A and 22B, that include a plurality of semiconductor light-emitting elements 22b which are fixed at least to the front surface of the film 22a in a state of being disposed two-dimensionally (display-like), and as a result this configuration allows to implement various levels of brightness and light-emitting patterns having different light-emitting shapes (various light-emitting graphics) by independently turning the plurality of semiconductor light-emitting elements 22b ON or OFF.

The light utilization efficiency of the light Ray 2, which is emitted backward from the semiconductor light-emitting elements 22b of the first and second film light sources 22A and 22B, improves. In other words, the reflection surface 40 can emit light by the light Ray 2, which is emitted backward from the semiconductor light-emitting elements 22b of the first and second film light sources 22A and 22B. Thereby the light emitted from the reflection surface 40 is visually recognized via the first and second film light sources 22A and 22B (film 22a), and three-dimensional light-emitting appearances having a perception of depth can be implemented.

The light distribution standards specified by laws and regulations can be satisfied (particularly in the case of a stop lamp and a turn signal lamp for which high brightness is demanded), because the semiconductor light-emitting elements 22b of which brightness is higher than an organic EL are used.

A vehicular lamp fitting having high product value, of which light-emitting appearances (light-emitting pattern) is completely different from a case of being used as a tail lamp and a case of being used as a stop lamp, can be provided.

This is because the first film light source 22A and the second film light source 22B are disposed in the same range in the front view, so as to be overlapped in the longitudinal direction of the vehicle.

Further, the first and second film light sources 22A and 22B having flexibility, on which the plurality of semiconductor light-emitting elements 22b are fixed in the state of being two-dimensionally disposed, are used. Therefore compared with a case of disposing each of the plurality of semiconductor light-emitting elements 22b independently at a predetermined position in a predetermined attitude, the plurality of semiconductor light-emitting elements 22b can be two-dimensionally or three-dimensionally disposed at predetermined positions in a predetermined attitude at the same time, merely by supporting the first and second film light sources 22A and 22B in the state of the film 22a maintaining a predetermined shape (e.g. curved shape) by the film light source support units 24 (24a to 24c).

The rear surface of the first film light source 22A and the front surface of the intermediate lens 24b are surface-contacted, and the rear surface of the second film light source 22B and the front surface of the rear lens 24c are surface-contacted, therefore the shapes of the first film light source 22A and the second film light source 22B (film) can be maintained in predetermined shapes (e.g. curved shapes).

In the above mentioned prior art (see Japanese Patent Application Publication No. 2016-58136), the organic EL panel, which functions as the tail lamp, and the organic EL panel which functions as the stop lamp, are disposed in parallel (side by side) in the front view, which means that the size of the vehicular lamp fitting in the front view is large.

On the other hand, the first and second film light sources 22A and 22B are disposed in the same range in the front view, so as to be overlapped in the longitudinal direction of the vehicle (in tandem in the longitudinal direction of the vehicle), hence compared with the above mentioned prior art, the size of the vehicular lamp fitting 10 in the front view can be smaller.

A slim and light lamp fitting can be configured, where the front lens 24a, the intermediate lens 24b and the rear lens 24c are fixed in a state where the first and second film light sources 22A and 22B are disposed between the front lens 24a and the intermediate lens 24b, and between the intermediate lens 24b and the rear lens 24c respectively.

The rear surface of the first film light source 22A and the front surface of the intermediate lens 24b are surface-contacted, and the rear surface of the second film light source 22B and the front surface of the rear lens 24c are surface-contacted, therefore the shapes of the first film light source 22A and the second film light source 22B (film) can be maintained in predetermined shapes (e.g. curved shapes).

The front surface of the first film light source 22A faces the rear surface of the front lens 24a via a space S1, and the front surface of the second film light source 22B faces the rear surface of the intermediate lens 24b via a space S2, hence damage to the front surface of the first film light source 22A and the front surface of the second film light source 22B (a plurality of semiconductor light-emitting elements 22b mounted on the front surfaces), caused by contacting the rear surface of the front lens 24a and the rear surface of the intermediate lens 24b, can be prevented.

The emitted color of the semiconductor light-emitting elements 22b of the first film light source 22A and the emitted color of the semiconductor light-emitting elements 22b of the second film light source 22B are the same, therefore one lamp fitting unit 20 can implement multi-functions using a same color, such as a tail lamp (red) and a stop lamp (red).

The first light distribution pattern (e.g. tail lamp light distribution pattern) can be formed by causing a part or all of the plurality of semiconductor light-emitting elements 22b of the first film light source 22A and the second film light source 22B to emit light according to the first light emission pattern. Further, the second light distribution pattern (e.g. stop lamp light distribution pattern) can be formed by causing a part or all of the plurality of semiconductor light-emitting elements 22b to emit light according to the second light emission pattern.

The films 22a of the first and second film light sources 22A and 22B are transparent films, hence the light, which the semiconductor light-emitting elements 22b of the first and second film light sources 22A and 22B emit backward, transmits through the films 22a. Thereby the light utilization efficiency of the light emitted backward from the semiconductor light-emitting elements 22b of the first and second film light sources 22A and 22B improves.

The first and second film light sources 22A and 22B having flexibility, on which the semiconductor light-emitting elements 22b having brightness higher than an organic EL are fixed in the state of being two-dimensionally disposed, are used, hence the vehicular lamp fitting 10 that is slim and flexible, and has a sufficient quantity of light to form the stop lamp light distribution, the turn signal lamp light distribution and the like, can be provided.

Modifications will be described next.

An example of applying the vehicular lamp fitting to a vehicular signal lamp fitting, such as a tail lamp, a stop lamp and a turn signal lamp, was described, but the present disclosure is not limited to this. For example, the vehicular lamp fitting may be applied to a DRL lamp, the interior illumination of the vehicle (e.g. indicator) an alarm lamp, and general lighting.

An example when the light emission color of the semiconductor light-emitting elements 22b of the first film light source 22A, and the light emission color of the semiconductor light-emitting elements 22b of the second film light source 22B are the same, was described, but the present disclosure is not limited to this. For example, the light emission color of the semiconductor light-emitting elements 22b of the first film light source 22A and the light emission color of the semiconductor light-emitting elements 22b of the second film light source 22B may be different from each other.

For example, the light emission color of the semiconductor light-emitting elements 22b of the first film light source 22A may be red, and the light emission color of the semiconductor light-emitting elements 22b of the second film light source 22B may be amber.

Then one lamp fitting unit 20 can implement a multi-function vehicular lamp fitting having different colors, such as a tail lamp (red) and a turn signal lamp (amber).

An opaque film may be used for the film 22a of the film light source.

An example when the lamp fitting unit 20 is configured using the two film light sources 22 (e.g. first and second film light sources 22A and 22B) which are overlapped in the longitudinal direction of the vehicle, was described, but the present disclosure is not limited to this.

For example, according to an embodiment not covered by the claims, the lamp fitting unit 20 may be configured using film light sources which are not overlapped in the longitudinal direction of the vehicle.

Further, the lamp fitting unit 20 may be configured using three or more film light sources which are overlapped in the longitudinal direction of the vehicle.

FIG. 10 is an example when the lamp fitting unit 20 is configured using four film light sources which are overlapped in the longitudinal direction of the vehicle. In FIG. 10, the reference sign 22C indicates a film light source for a turn signal lamp (light emission color of the semiconductor light-emitting elements is amber), and the reference sign 22D indicates the film light source for a rear lamp (light emission color of the semiconductor light-emitting elements is white).

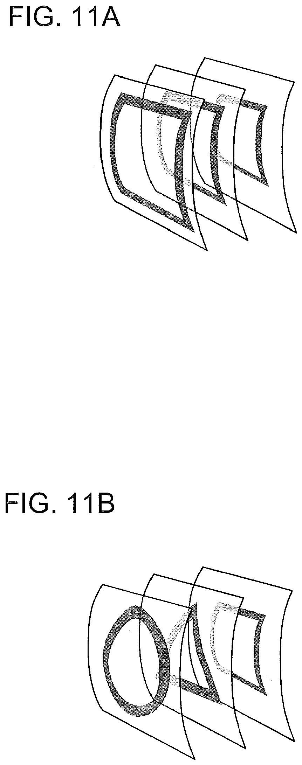

FIG. 11A and FIG. 11B are examples of the light-emitting patterns of the film light sources (semiconductor light-emitting elements 22b).

The light-emitting patterns of the film light sources (semiconductor light-emitting elements 22b) may be light-emitting patterns of which light-emitting shapes are the same and sizes thereof are different depending on the film light sources, as illustrated in FIG. 11A, or may be light-emitting patterns of which light-emitting shapes are different depending on the film light source, as illustrated in FIG. 11B. Then the perspective of depth and the three-dimensional effect can be enhanced more so.

An example when the screws are used as the lens fixing unit 24d was described, but the present disclosure is not limited to this. For example, an engaging unit may be used as the lens fixing unit 24d. For example, a first claw is formed on the front lens 24a, a first hook and a second claw are formed on the intermediate lens 24b, and a second hook is formed on the rear lens 24c (or a first hook is formed on the front lens 24a, a first claw and a second hook are formed on the intermediate lens 24b, and a second claw is formed on the rear lens 24c), although these are not illustrated. Then the first claw and the first hook are engaged, and the second claw and the second hook are engaged. Thereby the front lens 24a, the intermediate lens 24b and the rear lens 24c may be positioned and fixed in this state.

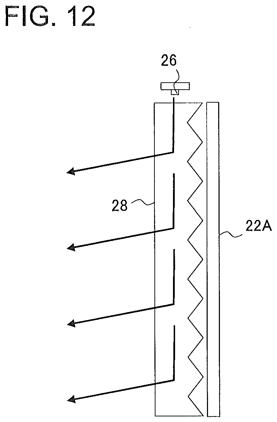

FIG. 12 is an example when the light-guiding plate 28, which guides the light from the semiconductor light-emitting elements 26 and emits the guided light from the front surface, is disposed between the front lens 24a and the first film light source 22A. On the rear surface of the light-guiding plate 28, a structure (a plurality of lens cuts, such as V-grooves) for the light from the semiconductor light-emitting elements 26, guided inside the light-guiding plate 28 to be emitted from the front surface, is formed.

Then in the case where the vehicular lamp fitting 10 functions as a tail lamp, a part or all of the respective semiconductor light-emitting elements 22b of the first film light source 22A and the second film light source 22B are emitted according to the first light-emitting pattern, the semiconductor light-emitting elements 26 are turned ON and the light from the semiconductor light-emitting elements 26, which is guided inside the light-guiding plate 28, is surface-emitted from the front surface. Thereby a light-emitting appearance having high design quality, where the first light-emitting pattern emerges in the surface emission, can be implemented.

The light-guiding plate 28, which guides the light from the semiconductor light-emitting elements 26 and emits the light from the front surface, may be disposed between the intermediate lens 24b and the second film light source 22B as well, although this is not illustrated.

Now as a modification, an example not covered by the claims when a lamp fitting unit 20A is configured using the film light sources 22, which are not overlapped in the longitudinal direction of the vehicle, will be described.

The lamp fitting unit 20A according to this modification (not illustrated) corresponds to the lamp fitting unit 20 , from which the first film light source 22A and the intermediate lens 24b are omitted. In this case, the second film light source 22B is not overlapped on the other film light sources. The rest is the same as the vehicular lamp fitting 10 . Therefore differences from the vehicular lamp fitting 10 will be mainly described herein below.

A light-emitting pattern of the second film light source 22B (semiconductor light-emitting elements 22b) will be described.

An example of the light-emitting pattern, when the vehicular lamp fitting 10 using the lamp fitting unit 20A functions as a tail lamp, will be described first.

When the vehicular lamp fitting 10 using the lamp fitting unit 20A functions as the tail lamp, a part or all of the semiconductor light-emitting elements 22b of the second film light source 22B are emitted according to a third light-emitting pattern.

The third light-emitting pattern is a pattern in which the portions indicated by the black dots in FIG. 4A (semiconductor light-emitting elements 22b), out of the semiconductor light-emitting elements 22b of the second film light source 22B, emit light at a first brightness. The third light-emitting pattern is not limited to this. For example, for the third light-emitting pattern, a light-emitting pattern, in which a part of the semiconductor light-emitting elements 22b, out of the portions (semiconductor light-emitting elements 22b) indicated by the black dots in FIG. 4A, are turned OFF or dimmed, may be used. Further, for the third light-emitting pattern, a light-emitting pattern, in which brightness of the portions (semiconductor light-emitting elements 22b) indicated by the black dots in FIG. 4A is gradually changed, may be used. Furthermore, for the third light-emitting pattern, a light-emitting pattern, in which the brightness of each semiconductor light-emitting element 22b is changed, may be used. Thereby a perspective (perspective of depth) can be expressed.

The third light-emitting pattern is not limited to a static light-emitting pattern, but may be a dynamic light-emitting pattern in which brightness, light-emitting shape, light-emitting position and so forth of the portions (semiconductor light-emitting elements 22b) indicated by the black dots in FIG. 4A change over time.

In the case where the semiconductor light-emitting elements 22b of the second film light source 22B emit light according to the third light-emitting pattern, a tail lamp light distribution pattern is formed by the light Ray 1, which is emitted forward from the semiconductor light-emitting elements 22b of the second film light source 22B.

Further, the reflection surface 40 emits light by reflecting the light Ray 2, which is emitted backward from the semiconductor light-emitting elements 22b of the second film light source 22B via the film 22a.

As described above, when the vehicular lamp fitting 10 using the lamp fitting unit 20A functions as the tail lamp, the second film light source 22B and the reflection surface 40 emit light respectively, and the reflection surface 40, which emits light behind the second film light source 22B, is visually recognized through the second film light source 22B. Thereby a three-dimensional light-emitting appearance, having a perspective of depth, is implemented.

Also as described above, the film light source support units 24 (24a to 24c) support the second film light source 22B in the state of maintaining a predetermined shape (e.g. curved shape). Thereby the semiconductor light-emitting elements 22b of the second film light source 22B are three-dimensionally disposed. This also implements a three-dimensional light-emitting appearances with a perspective of depth.

The lamp fitting unit 20A is disposed in the lamp chamber 54 in the state of maintaining a space between the lamp fitting unit and the housing 52, therefore the light-emitting appearance, that is visually recognized as if the lamp fitting unit 20A were floating in the lamp chamber 54, is implemented.

An example of the light-emitting pattern when the vehicular lamp fitting 10 using a lamp fitting unit 20A functions as a stop lamp will be described next.

When the vehicular lamp fitting 10 using the lamp fitting unit 20A functions as the stop lamp, a part or all of the semiconductor light-emitting elements 22b of the second film light source 22B are emitted according to a fourth light-emitting pattern, which is different from the third light-emitting pattern.

The fourth light-emitting pattern is a pattern in which the portions (semiconductor light-emitting elements 22b) indicated by the black dots in FIG. 4B, out of the semiconductor light-emitting elements 22b of the second film light source 22B, emit light at a second brightness (second brightness > first brightness), for example. The fourth light-emitting pattern is not limited to this. For example, for the fourth light-emitting pattern, a light-emitting pattern, in which a part of the portions (semiconductor light-emitting elements 22b) indicated by the black dots in FIG. 4B, are turned OFF or dimmed, may be used. Further, for the fourth light-emitting pattern, a light-emitting pattern, in which brightness of the portions (semiconductor light-emitting elements 22b) indicated by the black dots in FIG. 4B, gradually changes, may be used. Furthermore, for the fourth light-emitting pattern, a light-emitting pattern, in which the brightness of each semiconductor light-emitting element 22b is changed, may be used. Thereby a perspective (perspective of depth) can be expressed.

The fourth light-emitting pattern is not limited to a static light-emitting pattern, but may be a dynamic light-emitting pattern in which brightness, light-emitting shape, light-emitting position and so forth of the portions (semiconductor light-emitting elements 22b) indicated by the black dots in FIG. 4B change over time.

In the case where the semiconductor light-emitting elements 22b of the second film light source 22B emit light according to the fourth light-emitting pattern, as described above, the stop lamp light distribution pattern is formed by the light Ray 1, which is emitted forward from the semiconductor light-emitting elements 22b of the second film light source 22B.

Further, the reflection surface 40 emits light by reflecting the light Ray 2, which is emitted backward from the semiconductor light-emitting elements 22b by the second film light source 22B via the film 22a.

As described above, when the vehicular lamp fitting 10 using the lamp fitting unit 20A functions as the stop lamp, the second film light source 22B and the reflection surface 40 emit light respectively, and the reflection surface 40, which emits light behind the second film light source 22B, are visually recognized through the second film light source 22B. Thereby a three-dimensional light-emitting appearance, having a perspective of depth, is implemented.

Also as described above, the film light source support units 24 (24a to 24c) support the second film light source 22B in the state of maintaining a predetermined shape (e.g. curved shape). Thereby the semiconductor light-emitting elements 22b of the second film light source 22B are three-dimensionally disposed. This also implements a three-dimensional light-emitting appearance having a perspective of depth.

The lamp fitting unit 20A is disposed in the lamp chamber 54 in the state of maintaining a space between the lamp fitting unit and the housing 52. Therefore the light-emitting appearance, that is visually recognized as if the lamp fitting unit 20A were floating in the lamp chamber 54, is implemented.

As described above, according to this modification, a slim and light lamp fitting unit 20A can be configured, where the front lens 24a and the rear lens 24c are fixed in the state of the second film light source 22B being disposed between the front lens 24a and the rear lens 24c, in addition to the effects described above.

According to this modification, the rear surface of the second film light source 22B and the front surface of the rear lens 24c are surface-contacted, therefore the shape of the second film light source 22B (film 22a) can be maintained in a predetermined shape (e.g. curved shape).

According to this modification, the front surface of the second film light source 22B faces the rear surface of the front lens 24a via a space, hence damage to the front surface of the second film light source 22B (a plurality of semiconductor light-emitting elements 22b mounted on the front surface), caused by contacting the rear surface of the front lens 24a, can be prevented.

According to this modification, the tail lamp light distribution pattern and the stop lamp light distribution pattern can be formed using one film light source (e.g. second film light source 22B).

A vehicular lamp fitting 10A according to the present invention will be described next.

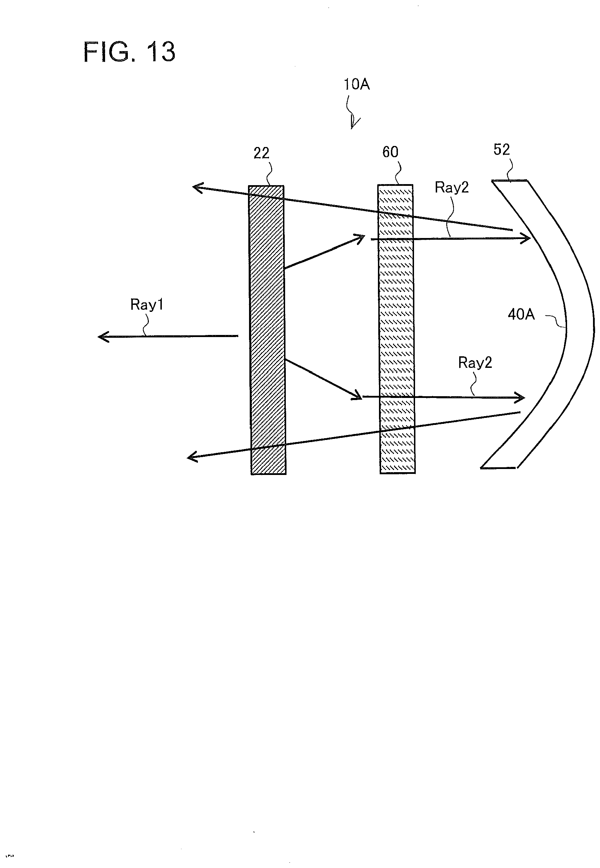

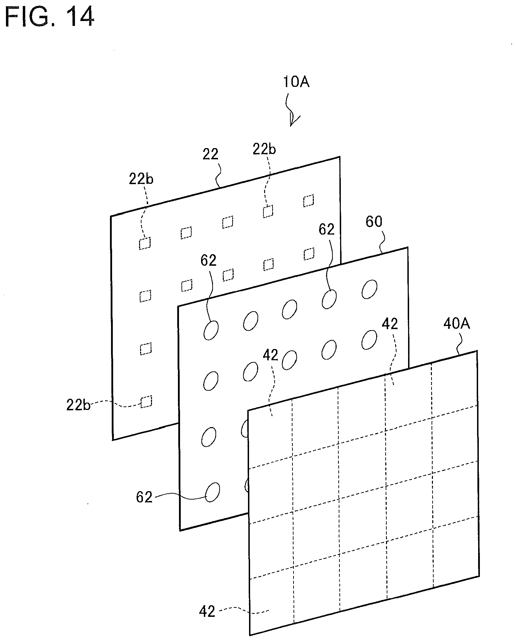

FIG. 13 is a schematic diagram (vertical cross-sectional view) of the vehicular lamp fitting 10A, and FIG. 14 is a schematic diagram (perspective view) of the vehicular lamp fitting 10A.

As illustrated in FIG. 13 and FIG. 14, the vehicular lamp fitting 10A corresponds to the vehicular lamp fitting 10 described above, where a light distribution control lens 60 is added and a reflection surface 40A is used instead of the reflection surface 40. The rest is the same as the vehicular lamp fitting 10 described above. Differences from the vehicular lamp fitting 10 described above will be mainly described herein below. A composing element the same as the vehicular lamp fitting 10 described above is denoted with the same reference sign, and redundant description will be omitted.

A film light source 22 is a film light source including a transparent film 22a having flexibility, and a plurality of semiconductor light-emitting elements 22b which are fixed to at least the front surface of the transparent film 22a in a state of being disposed two-dimensionally, and is a first film light source 22A or a second film light source 22B, for example.

The light distribution control lens 60 controls the light Ray 2, which is emitted from a part or all of the semiconductor light-emitting elements 22b of the film light source 22, and transmitted through the transparent film 22a. A material of the light distribution control lens 60 is a transparent resin, such as acrylic or polycarbonate.

The light distribution control lens 60 is a plate type lens which includes a front surface and a rear surface on the opposite side of the front surface. As illustrated in FIG. 14, the light distribution control lens 60 includes a plurality of lens units 62 to which a plurality of semiconductor light-emitting elements 22b of the film light source 22 correspond respectively. The plurality of lens units 62 may be disposed on the front surface or on the rear surface of the light distribution control lens 60.

Each of the plurality of lens units 62 is a lens unit of which focal point is set in the vicinity of the semiconductor light-emitting element 22b that the lens unit 62 corresponds to, and is a Fresnel lens, for example.

Each of the plurality of lens units 62 controls the light Ray 2, which is emitted from the semiconductor light-emitting element 22b that a lens unit 62 corresponds to, and transmitted through the transparent film 22a. In concrete terms, each of the plurality of lens units 62 converts the light Ray 2, which is emitted from the semiconductor light-emitting element 22b that the lens unit 62 corresponds to, and transmitted through the transparent film 22a, into a parallel light (see FIG. 13).

As described above, the light distribution control lens 60 controls the light Ray 2, which is emitted from a part or all of the semiconductor light-emitting elements 22b of the film light source 22, and transmitted through the transparent film 22a.

The light distribution control lens 60 is disposed between the film light source 22 and the reflection surface 40A in a state where the semiconductor light-emitting elements 22b of the film light source 22 and the lens units 62 of the light distribution control lens 60 face each other via the film 22a, and the lens units 62 of the light distribution control lens 60 and the reflection regions 42 of the reflection surface 40A face each other (see FIG. 13 and FIG. 14).

The reflection surface 40A reflects the light Ray 2, which is controlled by the light distribution control lens 60 to a target direction. The reflection surface 40A is formed by depositing aluminum on the front surface of the housing 52, for example.

As illustrated in FIG. 14, the reflection surface 40A includes a plurality of reflection regions 42 to which the plurality of lens units 62 correspond respectively, for example. Each of the plurality of reflection regions 42 is a hemispherical reflection surface, which is convex or concave toward the lens unit 62 to which this reflection region 42 corresponds. The reflection surface 40A may be a free-form surface.

The light Ray 2 controlled by the lens unit 62, that is, the light Ray 2 converted into the parallel light, is diffused vertically and horizontally by the reflection regions 42, transmitted through the light distribution control lens 60 and the film light source 22, and emitted forward (see FIG. 13).

The diffusion range of the light Ray 2 reflected by the reflection regions 42 can be adjusted, for example, by adjusting the curvature of the vertical cross-section and the curvature of the horizontal cross-section of each reflection region 42. For example, the curvature of the vertical cross-section and the curvature of the horizontal cross-section of each reflection region 42 can be adjusted such that the diffusion range of the light Ray 2, reflected by the reflection regions 42, is contained within the range of the tail lamp light distribution pattern or the stop lamp light distribution pattern.

As described above, the light Ray 2 controlled by the light distribution control lens 60 is reflected to the target direction.

The light distribution control lens 60 and the reflection surface 40A having the above configuration can be applied to various vehicular lamp fittings using the film light source 22.

For example, the light distribution control lens 60 and the reflection surface 40A having the above configuration can be applied to the vehicular lamp fitting 10 (the vehicular lamp fitting 10 using the two film light sources 22, which are overlapped in the longitudinal direction of the vehicle). Hereafter the vehicular lamp fitting 10 , to which the light distribution control lens 60 and the reflection surface 40A are applied, is called the vehicular lamp fitting 10A1.

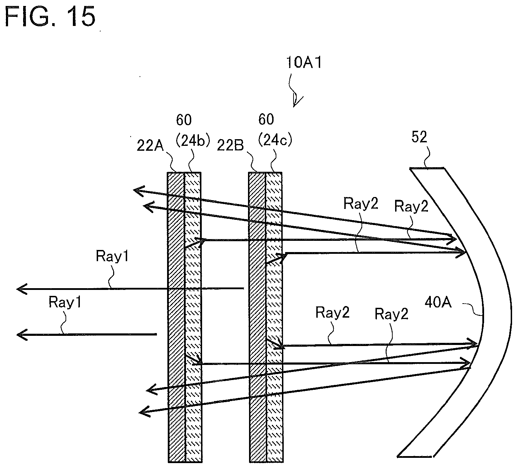

FIG. 15 is an example (schematic diagram) of the vehicular lamp fitting 10A1. In FIG. 15, the outer lens 50 and the front lens 24a are omitted.

In FIG. 15, the intermediate lens 24b and the rear lens 24c are configured as the light distribution control lenses 60 respectively. In other words, the intermediate lens 24b and the rear lens 24c function as the light distribution control lenses 60 respectively.

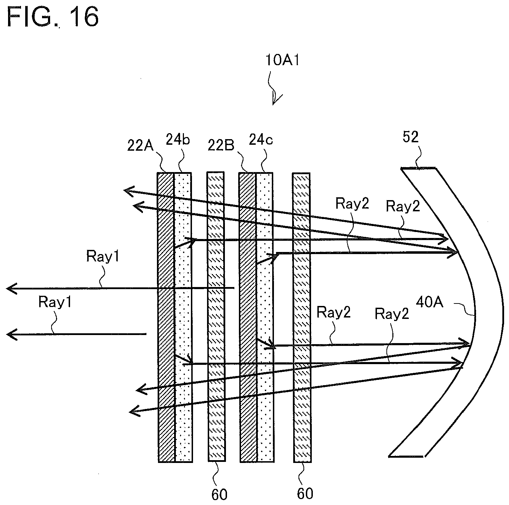

FIG. 16 is another example (schematic diagram) of the vehicular lamp fitting 10A1. In FIG. 16, the outer lens 50 and the front lens 24a are omitted.

In FIG. 16, the light distribution control lenses 60 are respectively disposed between the intermediate lens 24b and the second film light source 22B, and between the rear lens 24c and the reflection surface 40A.

According to the vehicular lamp fitting 10A1, in addition to the effect described above, the light utilization efficiency of the light Ray 2, which is emitted backward from the semiconductor light-emitting elements 22b of the first and second film light sources 22A and 22B, improves.

In other words, as illustrated in FIG. 15 and FIG. 16, when the vehicular lamp fitting 10A1 functions as a tail lamp, the tail lamp light distribution pattern can be formed by not only the light Ray 1, which is radiated (emitted) forward from the first and second film light sources 22A and 22B, but also by reflecting the light Ray 2 radiated (emitted) backward from the first and second film light sources 22A and 22B respectively to target directions using the reflection surface 40A. In concrete terms, the tail lamp light distribution pattern can be formed by the light Ray 2, which is radiated (emitted) backward from the first and second film light sources 22A and 22B respectively, is controlled by the light distribution control lens 60, is reflected by the reflection surface 40A, and transmitted through the light distribution control lens 60 and the first and second film light sources 22A and 22B. This is also the same when the vehicular lamp fitting 10A1 functions as a stop lamp.

Further, the light distribution control lens 60 and the reflection surface 40A having the above configuration may be applied to the vehicular lamp fitting 10 of the modification not covered by the claims (the vehicular lamp fitting 10 using the film light sources 22, which are not overlapped in the longitudinal direction of the vehicle). Hereafter the vehicular lamp fitting 10 of the modification, to which the light distribution control lens 60 and the reflection surface 40A are applied, is called the vehicular lamp fitting 10A2.

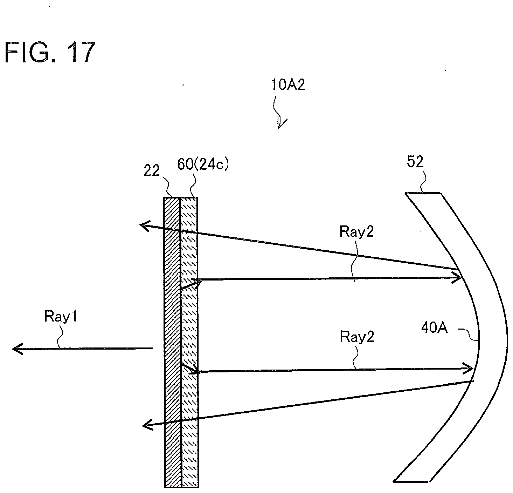

FIG. 17 is an example (schematic diagram) of the vehicular lamp fitting 10A2. In FIG. 17, the outer lens 50 and the front lens 24a are omitted.

In FIG. 17, the rear lens 24c is configured as the light distribution control lens 60. In other words, the rear lens 24c also functions as the light distribution control lens 60.

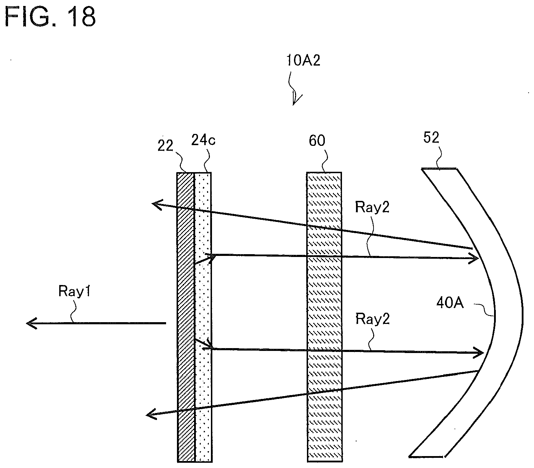

FIG. 18 is another example (schematic diagram) of the vehicular lamp fitting 10A2. In FIG. 18, the outer lens 50 and the front lens 24a are omitted.

In FIG. 18, the light distribution control lens 60 is disposed between the rear lens 24c and the reflection surface 40A.

According to the vehicular lamp fitting 10A2, in addition to the effect described above, the light utilization efficiency of the light Ray 2, which is emitted backward from the semiconductor light-emitting elements 22b of the film light source 22 (e.g. second film light source 22B), improves.

In other words, as illustrated in FIG. 17 and FIG. 18, when the vehicular lamp fitting 10A2 functions as a tail lamp, the tail lamp light distribution pattern can be formed by not only the light Ray 1, which is radiated (emitted) forward from the film light source 22, but also by reflecting the light Ray 2 radiated (emitted) backward from the film light source 22 to the target directions using the reflection surface 40A. In concrete terms, the tail lamp light distribution pattern can be formed by the light Ray 2, which is radiated (emitted) backward from the film light source 22, is controlled by the light distribution control lens 60, is reflected by the reflection surface 40A, and transmitted through the light distribution control lens 60 and the film light source 22. This is also the same when the vehicular lamp fitting 10A2 functions as a stop lamp.

As described above, according to the present invention, the light utilization efficiency of the light Ray 2, which is emitted backward from the semiconductor light-emitting elements 22b of the film light source 22, improves. In other words, a predetermined light distribution pattern (e.g. tail lamp light distribution pattern, stop lamp light distribution pattern) can be formed by not only the light Ray 1, which is radiated (emitted) forward from the film light source 22, but also by reflecting the light Ray 2, which is radiated (emitted) backward from the film light source 22 to the target directions using the reflection surface 40A.

A modification will be described next.

An example when a Fresnel lens is used for the lens unit 62 of the light distribution control lens 60 was described, but the present invention is not limited to this. For example, a flute cut or other lens cut may be used for the lens unit 62 of the light distribution control lens 60.

A vehicular lamp fitting 10B will be described next.

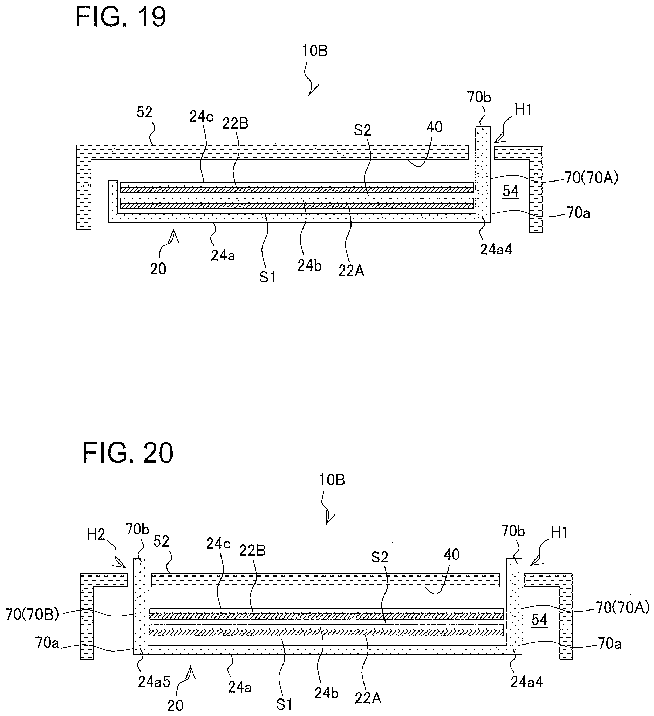

FIG. 19 is a schematic diagram (horizontal cross-sectional view) of the vehicular lamp fitting 10B. In FIG. 19, the outer lens 50 is omitted.

As illustrated in FIG. 19, the vehicular lamp fitting 10B corresponds to the vehicular lamp fitting 10, where a lamp fitting unit support unit 70 is used instead of the lamp fitting unit support unit (each flange unit 24a2 to 24c2). The rest is the same as the vehicular lamp fitting 10. Differences from the vehicular lamp fitting 10 will be mainly described herein below. A composing element the same as the vehicular lamp fitting 10 is denoted with the same reference sign, and redundant description will be omitted.

The lamp fitting unit support unit 70 supports the lamp fitting unit 20 in a lamp chamber 54 constituted by a housing 52 and an outer lens 50, in a state of maintaining a space between the lamp fitting unit and the housing 52.

For example, as illustrated in FIG. 19, the lamp fitting unit support unit 70 is a transparent support unit 70A of which base end portion 70a (corresponds to "a part" in the present invention) is fixed to the lamp fitting unit 20 (e.g. front lens 24a), and of which front end portion 70b (corresponds to "another part" in the present invention) is fixed to the housing 52.

The transparent support unit 70A extends backward from the base end portion 70a, which is fixed to one end 24a4 of the front lens 24a, and supports the lamp fitting unit 20 in the lamp chamber 54 in a state of maintaining a space between the lamp fitting unit and the housing 52 (cantilever support) by fixing the front end portion 70b to the housing 52. The transparent support unit 70A is fixed to the housing 52 by the front end portion 70b thereof, fitting to or engaged with an opening H1 formed in the housing 52, for example. A material of the transparent support unit 70A is a transparent resin, such as acrylic or polycarbonate.

The lamp fitting unit support unit 70 having the above configuration is applicable to various vehicular lamp fitting using the film light source 22. For example, the lamp fitting unit support unit 70 can be applied to the vehicular lamp fitting 10 (vehicular lamp fitting 10 using the two film light sources 22, which are overlapped in the longitudinal direction of the vehicle), the vehicular lamp fitting 10 of the modification (vehicular lap fitting 10 using the film light sources 22, which are not overlapped in the longitudinal direction of the vehicle), or the vehicular lamp fitting 10A of the present invention (vehicular lamp fitting 10 using the light distribution control lens 60 and the reflection surface 40A).

As described above, the following effects can be further implemented. That is, when the vehicular lamp fitting 10B functions as a tail lamp, the lamp fitting unit 20 is disposed in the lamp chamber 54 in a state of maintaining a space between the lamp fitting unit and the housing 52, and the lamp fitting unit support unit 70 is transparent and is not visually recognized very much, therefore a light-emitting appearance, that is visually recognized as if the lamp fitting unit 20 were floating in the lamp chamber 54, is implemented.

Modifications will be described next.

FIG. 20 is a schematic diagram (horizontal cross-sectional view) of the vehicular lamp fitting 10B.

An example of the lamp fitting unit support unit 70 using the transparent support unit 70A, which extends backward from the base end portion 70a, which is fixed to one end portion 24a4 of the front lens 24a, and of which front end portion 70b is fixed to the housing 52, was described, but the present disclosure is not limited to this. For example, as illustrated in FIG. 20, the lamp fitting unit support unit 70 using a transparent support unit 70B, which extends backward from the base end portion 70a, which is fixed to the other end portion 24a5 of the front lens 24a, and of which front end portion 70b is fixed to the housing 52, may be used in addition to the transparent support unit 70A.

An example of the base end portion 70a of the transparent support unit 70A (70B), which is fixed to the front lens 24a, was described, but the present disclosure is not limited to this. In other words, the base end portion 70a of the transparent support unit 70A (70B) may be fixed to other parts of the lamp fitting unit 20. For example, the base end portion 70a of the transparent support unit 70A (70B) may be fixed to the intermediate lens 24b, or to the rear lens 24c.

The numeric values used for each of the above embodiments are all examples, and needless to say, other appropriate numeric values may be used.

Each of the above embodiments are examples in all aspects. It should be understood that the present invention is not limited to the description of the embodiments. The present invention can be carried out in various forms, within the scope of the appended claims.

## Claims

1. A vehicular lamp fitting (10A) comprising:
a film light source (22, 22A, 22B) that includes a transparent film (22a) having flexibility, and a plurality of semiconductor light-emitting elements (22b) which are fixed in a state of being two-dimensionally disposed on at least a front surface of the transparent film (22a); and
a reflection surface (40A) that is disposed in a state of facing a rear surface of the transparent film (22a) of the film light source (22, 22A, 22B), and that reflects light which is emitted from a part or all of the plurality of semiconductor light-emitting elements (22b) and transmitted through the transparent film (22a);
a light distribution control lens (60) that controls light which is emitted from a part or all of the plurality of semiconductor light-emitting elements (22b) and transmitted through the transparent film (22a),
wherein the light distribution control lens (60) is disposed between the film light source (22, 22A, 22B) and the reflection surface (40A),
wherein the reflection surface (40A) reflects the light controlled by the light distribution control lens (60),
**characterized in that**
the vehicular lamp fitting (10A) comprises a plurality of the film light sources (22A, 22B),
wherein the plurality of film light sources (22A, 22B) are disposed in a state of being overlapped in a longitudinal direction of the vehicle within a same range (L1, L2) in a front view.

2. The vehicular lamp fitting according to Claim 1,
wherein the light distribution control lens (60) includes a plurality of lens units (62) respectively corresponding to the plurality of semiconductor light-emitting elements (22b),
wherein each of the plurality of lens units (62) controls light which is emitted from the semiconductor light-emitting element (22b) corresponding to the lens unit (62) and transmitted through the transparent film (22a).

3. The vehicular lamp fitting according to Claim 2, wherein each of the plurality of lens units (62) is a flute cut lens.

4. The vehicular lamp fitting according to Claim 2,
wherein each of the plurality of lens units (62) is a lens unit of which focal point is set in the vicinity of the semiconductor light-emitting element (22b) corresponding to the lens unit (62),
wherein the reflection surface (40A) reflects the light controlled by each of the plurality of lens units (62) to a target direction.

5. The vehicular lamp fitting according to Claim 2, wherein each of the plurality of lens units (62) is a Fresnel lens.

6. The vehicular lamp fitting according to Claim 1, further comprising a film light source support unit (24) that supports the film light source (22, 22A, 22B) in a state of the transparent film (22a) maintaining a predetermined shape,
wherein the film light source support unit (24) includes a front lens (24a), a rear lens (24c), and a lens fixing unit (24d) that fixes the front lens (24a) and the rear lens (24c),
wherein the lens fixing unit (24d) fixes the front lens (24a) and the rear lens (24c) in a state of the film light source (22, 22A, 22b) being disposed between the front lens (24a) and the rear lens (24c).

7. The vehicular lamp fitting according to Claim 6, wherein the rear lens (24c) is configured as the light distribution control lens(60).

8. The vehicular lamp fitting according to Claim 6, wherein the light distribution control lens (60) is disposed between the rear lens (24c) and the reflection surface (40A).

9. The vehicular lamp fitting according to Claim 1, further comprising:
a film light source support unit (24) that supports the film light source (22, 22A, 22B) in a state of the transparent film (22a) maintaining a predetermined shape; and
a plurality of the film light sources (22A, 22B),
wherein the plurality of film light sources (22A, 22B) are disposed in a state of being overlapped in a longitudinal direction of the vehicle within a same range (L1, L2) in a front view,
wherein the plurality of film light sources (22A, 22B) include at least a first film light source (22A) and a second film light source (22B),
wherein the film light source support unit (24) includes a front lens (24a), an intermediate lens (24b), a rear lens (24c) and a lens fixing unit (24d) which fixes the front lens (24a), the intermediate lens (24b) and the rear lens 24c),
wherein the lens fixing unit (24) fixes the front lens (24a), the intermediate lens (24b) and the rear lens (24c) in a state where the first film light source (22A) is disposed between the front lens (24a) and the intermediate lens (24b), and the second film light source (22B) is disposed between the intermediate lens (24b) and the rear lens (24c).

10. The vehicular lamp fitting according to Claim 9, wherein the intermediate lens (24b) and the rear lens (24c) are each configured as the light distribution control lens (60).

11. The vehicular lamp fitting according to claim 9, wherein the vehicular lamp fitting (10A1) comprises the light distribution control lenses (60) respectively disposed between the intermediate lens (24b)and the second film light source (22b), and between the rear lens (24c) and the reflection surface (40A).

12. The vehicular lamp fitting according to Claim 1, further comprising:
a film light source support unit (24) that supports the film light source (22, 22A, 22B) in a state of the transparent film (22a) maintaining a predetermined shape;
a lamp fitting unit (20) that includes the film light source (22, 22A, 22B) and the film light source support unit (24); and
a lamp fitting unit support unit (70) that is transparent and supports the lamp fitting unit (20),
wherein the lamp fitting unit support unit (70) supports the lamp fitting unit in a lamp chamber (54) constituted of a housing (52) and an outer lens (50) in a state of maintaining a space between the lamp fitting unit (20) and the housing (52).

13. The vehicular lamp fitting according to Claim 12, wherein the lamp fitting unit support unit (70) is a transparent support unit of which a part is fixed to the lamp fitting unit (20) and another part is fixed to the housing (52);
wherein preferably the lamp fitting unit (20) is cantilever-supported by the transparent support unit (70).

14. The vehicular lamp fitting according to Claim1, wherein the semiconductor light-emitting elements (22b) of each of the plurality of film light sources (22A, 22B) are arranged in a state of not overlapping with the semiconductor light-emitting elements (22b) of the other film light sources (22A, 22B) and overlapping with the transparent film (22a) portions of the other film light sources (22A, 22B) in a front view.

## Patentansprüche

1. Fahrzeuglampenanordnung (10A), die Folgendes aufweist:
eine Folienlichtquelle (22, 22A, 22B), die eine transparente Folie (22a) mit Flexibilität aufweist, und eine Vielzahl von Halbleiterlichtemissionselementen (22b), die in einem Zustand, in dem sie zweidimensional mindestens auf eine Vorderseite der transparenten Folie (22a) angeordnet sind, fixiert sind; und
eine Reflexionsfläche (40A), die in einem Zustand, in dem sie zu einer Hinterseite der transparenten Folie (22a) der Folienlichtquelle (22, 22A, 22B) weist, angeordnet ist, und die Licht reflektiert, welches von einem Teil oder von allen der Vielzahl von Halbleiterlichtemissionselementen (22b) emittiert wird und durch die transparente Folie (22a) hindurchgelassen wird;
eine Lichtverteilungssteuerlinse (60), die Licht steuert, welches von einem Teil oder von allen der Vielzahl von Halbleiterlichtemissionselementen (22b) emittiert wurde und durch die transparente Folie (22a) hindurchgelassen wurde;
wobei die Lichtverteilungssteuerlinse (60) zwischen der Folienlichtquelle (22, 22A, 22B) und der Reflexionsfläche (40A) angeordnet ist,
wobei die Reflexionsfläche (40A) das Licht reflektiert, welches durch die Lichtverteilungssteuerlinse (60) gesteuert wird,
**dadurch gekennzeichnet, dass**
die Fahrzeuglampenanordnung (10A) eine Vielzahl der Folienlichtquellen (22A, 22B) aufweist,
wobei die Vielzahl der Folienlichtquellen (22A, 22B) in einem Zustand angeordnet ist, in dem sie in einer Längsrichtung des Fahrzeugs in einem selben Bereich (L1, L2) in einer Ansicht von vorne in Überlappung sind.

2. Fahrzeuglampenanordnung nach Anspruch 1,
wobei die Lichtverteilungssteuerlinse (60) eine Vielzahl von Linseneinheiten (62) aufweist, die jeweils der Vielzahl von Halbleiterlichtemissionselementen (22b) entsprechen,
wobei jede der Vielzahl von Linseneinheiten (62) Licht steuert, welches von dem Halbleiterlichtemissionselement (22b) emittiert wurde, welches der Linseneinheit (62) entspricht und durch die transparente Folie (22a) hindurchgelassen wurde.

3. Fahrzeuglampenanordnung nach Anspruch 2, wobei jede der Vielzahl von Linseneinheiten (62) eine ausgekehlte Linse ist.

4. Fahrzeuglampenanordnung nach Anspruch 2,
wobei jede der Vielzahl von Linseneinheiten (62) eine Linseneinheit ist, deren Fokus bzw. Brennpunkt in der Nähe des Halbleiterlichtemissionselementes (22b) festgelegt ist, welches der Linseneinheit (62) entspricht,
wobei die Reflexionsfläche (40A) das Licht, welches von jeder der Vielzahl von Linseneinheiten (62) gesteuert wird, zu einer Zielrichtung reflektiert.

5. Fahrzeuglampenanordnung nach Anspruch 2, wobei jede der Vielzahl von Linseneinheiten (62) eine Fresnel-Linse ist.

6. Fahrzeuglampenanordnung nach Anspruch 1, die weiter eine Folienlichtquellentrageinheit (24) aufweist, welche die Folienlichtquelle (22, 22A, 22B) in einem Zustand trägt, in dem die transparente Folie (22a) eine vorbestimmte Form beibehält,
wobei die Folienlichtquellentrageinheit (24) eine vordere Linse (24a), eine hintere Linse (24c) und eine Linsenbefestigungseinheit (24d) aufweist, welche die vordere Linse (24a) und die hintere Linse (24c) befestigt,
wobei die Linsenbefestigungseinheit (24d) die vordere Linse (24a) und die hintere Linse (24c) in einem Zustand befestigt, in welchem die Folienlichtquelle (22, 22A, 22B) zwischen der vorderen Linse (24a) und der hinteren Linse (24c) angeordnet ist.

7. Fahrzeuglampenanordnung nach Anspruch 6, wobei die hintere Linse (24c) als die Lichtverteilungssteuerlinse (60) konfiguriert ist.

8. Fahrzeuglampenanordnung nach Anspruch 6, wobei die Lichtverteilungssteuerlinse (60) zwischen der hinteren Linse (24c) und der Reflexionsfläche (40A) angeordnet ist.

9. Fahrzeuglampenanordnung nach Anspruch 1, die weiter Folgendes aufweist:
eine Folienlichtquellentrageinheit (24), welche die Folienlichtquelle (22, 22A, 22B) in einem Zustand trägt, in welchem die transparente Folie (22a) eine vorbestimmte Form beibehält; und
eine Vielzahl von Folienlichtquellen (22A, 22B),
wobei die Vielzahl von Folienlichtquellen (22A, 22B) in einem Zustand angeordnet ist bzw. sind, in dem sie in einer Längsrichtung des Fahrzeugs in einem selben Bereich (L1, L2) in einer Frontansicht in Überlappung sind, wobei die Vielzahl von Folienlichtquellen (22A, 22B) zumindest eine erste Folienlichtquelle (22A) und eine zweite Folienlichtquelle (22B) aufweist, wobei die Folienlichtquellentrageinheit (24) eine vordere Linse (24a), eine Zwischenlinse (24b), eine hintere Linse (24c) und eine Linsenbefestigungseinheit (24d) aufweist, welche die vordere Linse (24a), die Zwischenlinse (24b) und die hintere Linse (24c) fixiert,
wobei die Linsenbefestigungseinheit (24) die vordere Linse (24a), die Zwischenlinse (24b) und die hintere Linse (24c) in einem Zustand fixiert, in welchem die erste Folienlichtquelle (22A) zwischen der vorderen Linse (24a) und der Zwischenlinse (24b) angeordnet ist, und in welchem die zweite Folienlichtquelle (22B) zwischen der Zwischenlinse (24b) und der hinteren Linse (24c) angeordnet ist.

10. Fahrzeuglampenanordnung nach Anspruch 9, wobei die Zwischenlinse (24b) und die hintere Linse (24c) jeweils als die Lichtverteilungssteuerlinse (60) konfiguriert sind.

11. Fahrzeuglampenanordnung nach Anspruch 9, wobei die Fahrzeuglampenanordnung (10A1) die Lichtverteilungssteuerlinsen (60) aufweist, die jeweils zwischen der Zwischenlinse (24b) und der zweiten Folienlichtquelle (22b) und zwischen der hinteren Linse (24c) und der Reflexionsfläche (40A) angeordnet sind.

12. Fahrzeuglampenanordnung nach Anspruch 1, die weiter Folgendes aufweist:
eine Folienlichtquellentrageinheit (24), welche die Folienlichtquelle (22, 22A, 22B) in einem Zustand trägt, in welchem die transparente Folie (22a) eine vorbestimmte Form beibehält;
eine Lampenanordnungseinheit (20), welche die Folienlichtquelle (22, 22A, 22B) und die Folienlichtquellentrageinheit (24) aufweist; und
eine Lampenanordnungseinheittrageinheit (70), die transparent ist und die Lampenanordnungseinheit (20) trägt,
wobei die Lampenanordnungseinheittrageinheit (70) die Lampenanordnungseinheit in einer Lampenkammer (54) trägt, die aus einem Gehäuse (52) und einer äußeren Linse (50) besteht, und zwar in einem Zustand, in dem ein Freiraum zwischen der Lampenanordnungseinheit (20) und dem Gehäuse (52) beibehalten wird,

13. Fahrzeuglampenanordnung nach Anspruch 12, wobei die Lampenanordnungseinheittrageinheit (70) eine transparente Trageinheit ist, wobei ein Teil davon an der Lampenanordnungseinheit (20) befestigt ist, und wobei ein anderer Teil an dem Gehäuse (52) befestigt ist;
Wobei vorzugsweise die Lampenanordnungseinheit (20) auskragend bzw. vorstehend von der transparenten Trageinheit (70) getragen wird.

14. Fahrzeuglampenanordnung nach Anspruch 1, wobei die Halbleiterlichtemissionselemente (22b) von jeder der Vielzahl von Folienlichtquellen (22A, 22B) in einem Zustand angeordnet sind, in dem sie nicht mit den Halbleiterlichtemissionselementen (22b) der anderen Folienlichtquellen (22A, 22B) in Überlappung sind und mit Teilen der transparenten Folie (22a) der anderen Folienlichtquellen (22A, 22B) in einer Ansicht von vorne in Überlappung sind.

## Revendications

1. Montage de lampe de véhicule (10A) comprenant :
une source de lumière en film (22, 22A, 22B) qui comporte un film transparent (22a) ayant une flexibilité, et une pluralité d'éléments électroluminescents semiconducteurs (22b) qui sont fixés dans un état de disposition bidimensionnelle sur au moins une surface avant du film transparent (22a) ; et
une surface de réflexion (40A) qui est disposée dans un état faisant face à une surface arrière du film transparent (22a) de la source de lumière en film (22, 22A, 22B), et qui réfléchit la lumière qui est émise par une partie ou la totalité de la pluralité d'éléments électroluminescents semiconducteurs (22b) et transmise à travers le film transparent (22a) ;
une lentille de commande de distribution de lumière (60) qui commande la lumière qui est émise à partir d'une partie ou de la totalité de la pluralité d'éléments électroluminescents semiconducteurs (22b) et transmise à travers le film transparent (22a),
dans lequel la lentille de commande de distribution de lumière (60) est disposée entre la source de lumière en film (22, 22A, 22B) et la surface de réflexion (40A),
dans lequel la surface de réflexion (40A) réfléchit la lumière commandée par la lentille de commande de distribution de lumière (60),
**caractérisé en ce que**
le montage de lampe de véhicule (10A) comprend une pluralité de sources de lumière en film (22A, 22B),
dans lequel la pluralité de sources de lumière en film (22A, 22B) sont disposées dans un état de chevauchement dans une direction longitudinale du véhicule dans une même plage (L1, L2) en vue de devant.

2. Montage de lampe de véhicule selon la revendication 1,
dans lequel la lentille de commande de distribution de lumière (60) comporte une pluralité d'unités de lentilles (62) correspondant respectivement à la pluralité d'éléments électroluminescents semiconducteurs (22b),
dans lequel chacune de la pluralité d'unités de lentilles (62) commande la lumière qui est émise par l'élément électroluminescent semiconducteur (22b) correspondant à l'unité de lentille (62) et transmise à travers le film transparent (22a).

3. Montage de lampe de véhicule selon la revendication 2, dans lequel chacune de la pluralité d'unités de lentilles (62) est une lentille taillée en cannelure.

4. Montage de lampe de véhicule selon la revendication 2,
dans lequel chacune de la pluralité d'unités de lentilles (62) est une unité de lentille dont le point focal est placé au voisinage de l'élément électroluminescent semiconducteur (22b) correspondant à l'unité de lentille (62),
dans lequel la surface de réflexion (40A) réfléchit la lumière commandée par chacune de la pluralité d'unités de lentilles (62) dans une direction cible.

5. Montage de lampe de véhicule selon la revendication 2, dans lequel chacune de la pluralité d'unités de lentilles (62) est une lentille de Fresnel.

6. Montage de lampe de véhicule selon la revendication 1, comprenant en outre une unité de support de source de lumière en film (24) qui supporte la source de lumière en film (22, 22A, 22B) dans un état où le film transparent (22a) conserve une forme prédéterminée,
dans lequel l'unité de support de source de lumière en film (24) comporte une lentille avant (24a), une lentille arrière (24c) et une unité de fixation de lentilles (24d) qui fixe la lentille avant (24a) et la lentille arrière (24c),
dans lequel l'unité de fixation de lentilles (24d) fixe la lentille avant (24a) et la lentille arrière (24c) dans un état où la source de lumière en film (22, 22A, 22B) est disposée entre la lentille avant (24a) et la lentille arrière (24c).

7. Montage de lampe de véhicule selon la revendication 6, dans lequel la lentille arrière (24c) est configurée comme étant la lentille de commande de distribution de lumière (60).

8. Montage de lampe de véhicule selon la revendication 6, dans lequel la lentille de commande de distribution de lumière (60) est disposée entre la lentille arrière (24c) et la surface de réflexion (40A).

9. Montage de lampe de véhicule selon la revendication 1, comprenant en outre :
une unité de support de source de lumière en film (24) qui supporte la source de lumière en film (22, 22A, 22B) dans un état où le film transparent (22a) conserve une forme prédéterminée ; et
une pluralité de sources de lumière en film (22A, 22B),
dans lequel la pluralité de sources de lumière en film (22A, 22B) sont disposées dans un état de chevauchement dans une direction longitudinale du véhicule dans une même plage (L1, L2) en vue de devant,
dans lequel la pluralité de sources de lumière en film (22A, 22B) comporte au moins une première source de lumière en film (22A) et une deuxième source de lumière en film (22B),
dans lequel l'unité de support de source de lumière en film (24) comporte une lentille avant (24a), une lentille intermédiaire (24b), une lentille arrière (24c) et une unité de fixation de lentilles (24d) qui fixe la lentille avant (24a), la lentille intermédiaire (24b) et la lentille arrière (24c),
dans lequel l'unité de fixation de lentilles (24) fixe la lentille avant (24a), la lentille intermédiaire (24b) et la lentille arrière (24c) dans un état où la première source de lumière en film (22A) est disposée entre la lentille avant (24a) et la lentille intermédiaire (24b), et où la deuxième source de lumière en film (22B) est disposée entre la lentille intermédiaire (24b) et la lentille arrière (24c).

10. Montage de lampe de véhicule selon la revendication 9, dans lequel la lentille intermédiaire (24b) et la lentille arrière (24c) sont chacune configurées comme étant la lentille de commande de distribution de lumière (60).

11. Montage de lampe de véhicule selon la revendication 9, dans lequel le montage de lampe de véhicule (10A1) comprend les lentilles de commande de distribution de lumière (60) disposées entre la lentille intermédiaire (24b) et la deuxième source de lumière en film (22b) et entre la lentille arrière (24c) et la surface de réflexion (40A), respectivement.

12. Montage de lampe de véhicule selon la revendication 1, comprenant en outre :
une unité de support de source de lumière en film (24) qui supporte la source de lumière en film (22, 22A, 22B) dans un état où le film transparent (22a) conserve une forme prédéterminée ;
une unité de montage de lampe (20) qui comporte la source de lumière en film (22, 22A, 22B) et l'unité de support de source de lumière en film (24) ; et
une unité de support d'unité de montage de lampe (70) qui est transparente et qui supporte l'unité de montage de lampe (20),
dans lequel l'unité de support d'unité de montage de lampe (70) supporte l'unité de montage de lampe dans une chambre de lampe (54) constituée d'un boîtier (52) et d'une lentille extérieure (50) dans un état de maintien d'un espace entre l'unité de montage de lampe (20) et le boîtier (52).

13. Montage de lampe de véhicule selon la revendication 12, dans lequel l'unité de support d'unité de montage de lampe (70) est une unité de support transparente dont une partie est fixée à l'unité de montage de lampe (20) et dont une autre partie est fixée au boîtier (52) ;
dans lequel, de préférence, l'unité de montage de lampe (20) est soutenue en porte-à-faux par l'unité de support transparente (70).

14. Montage de lampe de véhicule selon la revendication 1, dans lequel les éléments électroluminescents semiconducteurs (22b) de chacune de la pluralité de sources de lumière en film (22A, 22B) sont agencés dans un état de non chevauchement avec les éléments électroluminescents semiconducteurs (22b) des autres sources de lumière en film (22A, 22B) et de chevauchement des parties de film transparent (22a) des autres sources de lumière en film (22A, 22B) en vue de devant.
